(19) **Europäisches Patentamt / European Patent Office / Office européen des brevets**

(11) **EP 4 379 922 B1**

(12) **EUROPEAN PATENT SPECIFICATION**

(45) Date of publication and mention
of the grant of the patent:
**06.05.2026 Bulletin 2026/19**

(21) Application number: **22947319.4**

(22) Date of filing: **23.06.2022**

(51) International Patent Classification (IPC):
***H01M 50/342*** (2021.01)          ***H01M 50/367*** (2021.01)
***H01M 50/209*** (2021.01)

(52) Cooperative Patent Classification (CPC):
**H01M 50/3425; H01M 10/42; H01M 50/147;**
**H01M 50/209; H01M 50/244; H01M 50/30;**
**H01M 50/342; H01M 50/35; H01M 50/358;**
**H01M 50/367; H01M 2200/20; Y02E 60/10**

(86) International application number:
**PCT/CN2022/100760**

(87) International publication number:
**WO 2023/245547 (28.12.2023 Gazette 2023/52)**

(54) **BATTERY, AND ELECTRIC DEVICE**

BATTERIE UND ELEKTRISCHE VORRICHTUNG

BATTERIE ET DISPOSITIF ÉLECTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.06.2024 Bulletin 2024/23**

(73) Proprietor: **Contemporary Amperex Technology
(Hong Kong) Limited
Central, Central And Western District (HK)**

(72) Inventors:
• **KE, Jianhuang
Ningde, Fujian 352100 (CN)**
• **CHEN, Xiaobo
Ningde, Fujian 352100 (CN)**

• **LI, Yao
Ningde, Fujian 352100 (CN)**

(74) Representative: **Gong, Jinping
CocreateIP
Neumarkter Straße 21
81673 München (DE)**

(56) References cited:
WO-A1-2019/005502          WO-A1-2022/082395
CN-A- 112 072 046          CN-A- 112 103 444
CN-U- 213 026 308          DE-A1- 102013 216 071
US-A1- 2021 296 625          US-A1- 2022 013 757
US-A1- 2022 013 849          US-A1- 2022 059 901
US-A1- 2022 123 423

**Description**

## TECHNICAL FIELD

The present application relates to the technical field of batteries, and in particular, to a battery as specified in any one of claims 1-11 and an electrical device as specified in claim 12.

## BACKGROUND

With the continuous advancement of battery technology, various new energy industries using batteries as energy storage devices have developed rapidly. In the development of the battery technologies, safety is also a non-negligible issue in addition to improvement of performance of the batteries. If the safety of the battery cannot be guaranteed, the battery cannot be used. Therefore, how to enhance the safety of the batteries is an urgent technical problem to be solved in the battery technologies.

WO 2019/005502 A1 discloses electrochemical cell housings.

US 2022/013849 A1 discloses a battery and its related device, preparation method and preparation equipment.

DE 10 2013 216071 discloses a galvanic system comprising a plurality of galvanic cells and a degassing device for discharging a fluid escaping from one or more of the galvanic cells.

US 2022/059901 A1 discloses a battery tray and a power battery pack.

US 2022/123423 A1 discloses a battery pack including battery cell accommodated in a first box body and including an explosion-proof valve, where the explosion-proof valve faces towards a baffle plate, which is connected to a cross beam and sealing an exhaust vent.

## SUMMARY OF THE INVENTION

Embodiments of the present application provide a battery and an electrical device, which can improve the safety of batteries. The invention is defined by the appended claims.

In a first aspect, provided is a battery, comprising: a box body including an electrical cavity; a battery cell accommodated in the electrical cavity, and provided with a pressure relief mechanism on a first wall of the battery cell; a first passage and a second passage, configured to be able to communicate with the inside of the battery cell through the pressure relief mechanism when the pressure relief mechanism is actuated, wherein the first passage is used to discharge the emissions discharged from the pressure relief mechanism into the electrical cavity, and the second passage is used to discharge the emissions discharged from the pressure relief mechanism out of the electrical cavity. The electrical cavity includes a second wall, and the first wall faces the second wall. The battery further comprises: a connecting structure, the connection structure is arranged between the first wall and the second wall, and the connecting structure is used to form at least part of the first passage. The connecting structure is provided with an avoidance region corresponding to the pressure relief mechanism, and the avoidance region is used to provide a deformation space for the pressure relief mechanism when it is actuated; and the avoidance region corresponds to at least two pressure relief mechanisms.

When thermal runaway or other abnormal conditions occur in the battery cell, the high-temperature and high-pressure emissions generated inside the battery cell is discharged toward the direction where the battery cell is equipped with the pressure relief mechanism. Such emissions are usually very powerful and destructive, and if only one passage is provided, the emissions are likely to break through one or more structures on or around the passage, causing further safety issues. Therefore, for the battery of the embodiments of the present application, the box body of the battery includes an electrical cavity, and the battery further includes a first passage and a second passage; wherein the electrical cavity is used to accommodate a battery cell, and a first wall of the battery cell is provided with a pressure relief mechanism, the first passage is used to discharge the emissions discharged from the pressure relief mechanism into the electrical cavity, and the second passage is used to discharge the emissions discharged from the pressure relief mechanism out of the electrical cavity. That is, the emissions discharged through the pressure relief mechanism can be discharged through two passages simultaneously, which can speed up the discharge and reduce the risk of explosion of the battery.

In this way, the pressure relief mechanism of the battery cell faces the wall of the electrical cavity instead of facing other battery cells, so that it is convenient to arrange an avoidance structure on the wall of the electrical cavity to provide a deformation avoidance space for the pressure relief mechanism, which can improve the space utilization of the battery, and can also reduce the risk of thermal runaway of other battery cells caused by the battery cell with thermal runaway and improve the safety of the battery.

In some embodiments, a first space is provided between the second wall and the first wall, and the first passage includes the first space.

The first passage is realized through the first space. On the one hand, it is easy to realize, and there is no need to add other components, which can save space; on the other hand, the first space is provided between the first wall and the second wall, which can reduce the sealing requirements for the electrical cavity, especially the sealing requirements for the second wall, thereby reducing the difficulty of processing the battery and improving the processing efficiency of the battery.

Realizing at least part of the first passage through the connecting structure can, on the one hand, improve the structural stability between the first wall and the second wall, especially when the battery cell does not have thermal runaway, the connecting structure can be used to realize relative fixing between the first wall and the second wall, or can also realize the sealing between the first wall and the second wall; on the other hand, by reasonably setting the specific shape and position of the connecting structure, the position of the first passage can be adjusted, and then the directional discharge of emissions through the first passage is realized, and the safety of the battery is improved.

In some embodiments, the connecting structure is provided with a first flow channel, and the first passage includes the first flow channel.

The emissions discharged through the pressure relief mechanism can be discharged into the electrical cavity through the first flow channel. In this way, by setting the position of the first flow channel reasonably, the directional discharge of the emissions can be realized, and the influence of the emissions on individual components in the electrical cavity can be reduced, thereby improving the safety of the battery.

In some embodiments, the first flow channel includes through holes and/or grooves penetrating through the connecting structure, which not only facilitates processing, but also allows the emissions to pass through quickly to avoid accumulation.

In some embodiments, the radial dimension of the first flow channel is less than or equal to 2 mm, and the radial direction is perpendicular to the flow direction of the emissions in the first flow channel.

In this way, the size of the first flow channel can be avoided from being too large, so that excessive emissions flowing through the first flow channel can be avoided, and the particle size of the emissions flowing through the first flow channel can also be avoided from being too large, which has a filtering effect on the emissions, thereby reducing the influence of the emissions of the battery cell with thermal runaway on other battery cells, and avoiding the thermal diffusion of the battery as much as possible.

In some embodiments, the connecting structure is configured to be damaged when the pressure relief mechanism is actuated, so that a second space is formed between the first wall and the second wall, and the first passage includes the second space.

By reasonably selecting the material of the connecting structure, the connecting structure can be damaged when the pressure relief mechanism is actuated, thereby forming a second space without additional processing of the connecting structure, which is more convenient and can also ensure the sealing performance of the battery cell during normal use.

In some embodiments, the connecting structure includes a melting layer arranged between the first wall and the second wall, the melting layer is configured to be melted upon actuation of the pressure relief mechanism to form the second space between the first wall and the second wall.

Since the emissions discharged through the pressure relief mechanism are high-temperature emissions, the melting layer can be melted upon thermal runaway of the battery cell to form the second space, while the battery cell is not easy to be damaged during normal use, which can ensure the safety and stability of the battery.

In some embodiments, the thickness of the melting layer is 0.5 mm to 3 mm.

The thickness of the melting layer is usually greater than or equal to 0.5 mm, so as to prevent the second space formed after the melting layer is melted from being too small, or even failure to form an effective second space, thereby preventing the first passage from being too small and hindering the discharge of the emissions, further avoiding explosion of the battery. In addition, the thickness of the melting layer is usually less than or equal to 3 mm, so as to avoid that when the thickness of the melting layer is too large, the melted part is too large, that is, the second space formed is too large, which will cause the discharge of a large amount of emissions into the electrical cavity through the second space. This is likely to cause extensive damage to the electrical cavity, and especially may cause short circuits of different bus components, thereby affecting the safety of the battery.

The connecting structure is provided with an avoidance region corresponding to the pressure relief mechanism, and the avoidance region is used to provide a deformation space for the pressure relief mechanism when it is actuated, so as to prevent the connecting structure from covering the pressure relief mechanism and causing delayed actuation of the pressure relief mechanism, thereby discharging the emissions quickly through the pressure relief mechanism.

The avoidance region corresponds to at least two pressure relief mechanisms, so as to facilitate the processing of the avoidance region.

In some embodiments, the connecting structure further includes: a blocking structure arranged between the first wall and the second wall and located around the pressure relief mechanism. The blocking structure is used to block the emissions discharged through the pressure relief mechanism from reaching the electrode terminals of the battery cell.

Since the connecting structure can be used to form at least part of the first passage which discharges the emissions passing through the pressure relief mechanism into the electrical cavity in which the electrode terminals are also located, if the emissions are discharged to the bus component connecting the electrode terminals, it is easy to cause a short circuit of different bus components, which will cause secondary damage to the battery, and even cause the battery to explode. Therefore, the explosion of the battery can be avoided and the safety of the battery can be improved by providing the blocking structure. In addition, when the connecting structure includes a binder, the blocking structure of the embodiment of the present application can also be used to avoid glue overflow.

In some embodiments, the electrode terminal is located on a third wall of the battery cell, the third wall intersects with the first wall, and the blocking structure is arranged on a side of the pressure relief mechanism close to the electrode terminal. In this way, when the pressure relief mechanism is actuated, the emissions are blocked by the blocking structure, and there is no or only a very small part of them that can cross the blocking structure to reach the third wall, thereby reducing the risk of short circuit of the bus components and improving the safety of the battery.

In some embodiments, the connecting structure includes a thermal pad and/or a sealing pad arranged between the first wall and the second wall. The connecting structure includes a thermal pad arranged between the first wall and the second wall, and the thermal pad can dissipate heat for the battery cells during the use of the battery. When the connecting structure includes a sealing pad, the sealing performance between the first wall and the second wall can be improved.

In some embodiments, the battery includes: a battery cell assembly; the battery cell assembly includes a plurality of the battery cells arranged along a first direction, the electrical cavity includes a fourth wall intersecting with the second wall, a third space is provided between the end face of the battery cell assembly facing the fourth wall and the fourth wall, and the first passage includes the third space.

Realizing at least part of the first passage through the third space can eliminate the need to add additional components, reduce processing difficulty, and also reduce the sealing requirements between the end face and the fourth wall.

In some embodiments, the battery further includes: a first spacing structure arranged between the end face and the fourth wall; the first spacing structure is used to form at least part of the first passage.

Realizing at least part of the first passage through the first spacing structure can, on the one hand, improve the structural stability between the end face and the fourth wall, especially when the battery cell does not have thermal runaway, the first spacing structure can be used to realize relative fixing between the end face and the fourth wall, or can also achieve the sealing performance between the end face wall and the fourth wall; on the other hand, by reasonably setting the specific shape and position of the first spacing structure, the position and direction of the first passage can be adjusted, and then the directional discharge of the emissions through the first passage is realized, and the safety of the battery is improved.

In some embodiments, the first spacing structure is provided with a second flow channel, and the first passage includes the second flow channel. The emissions discharged through the pressure relief mechanism can be discharged through the second flow channel. **In** this way, by setting the position of the second flow channel reasonably, the directional discharge of the emissions can be realized, and the influence of the emissions on individual components in the electrical cavity can be reduced, for example, the influence on electrode terminals and bus components can be avoided, thereby improving the safety of the battery.

In some embodiments, the battery further includes: a second spacing structure arranged between two adjacent battery cells; the second spacing structure is used to form at least part of the first passage.

The second spacing structure arranged between two adjacent battery cells in the battery can be used to absorb the expansion and deformation of the battery cells when the battery cells are in normal use; when the isolation component under the battery cells is a thermal management component, the second spacing structure can also be used to block the moisture generated by the thermal management component; when the battery cells undergo thermal runaway, on the one hand, the second spacing structure can block the heat transferred between the battery cells; on the other hand, the second spacing structure can be used to form at least part of the first passage, the second spacing structure can thus allow a small amount of emissions to discharge into the electrical cavity, which increases the discharge path of the emissions, and hence improves the discharge efficiency of the emissions.

In some embodiments, the second spacing structure is configured to be damaged when the pressure relief mechanism is actuated, so that a fourth space is formed between the two battery cells, and the first passage includes the fourth space.

In this way, by reasonably selecting the material of the second spacing structure, the second spacing structure can be damaged when the pressure relief mechanism is actuated, thereby forming a fourth space without additional processing of the second spacing structure, which is more convenient and can also ensure the sealing performance and stability of the battery cell during normal use.

In some embodiments, the second spacing structure is provided with a third flow channel, and the first passage includes the third flow channel. By reasonably arranging the position of the third flow channel, the directional discharge of the emissions can be realized, the influence of the emissions on individual components in the electrical cavity can be reduced, the thermal diffusion between the battery cells can be avoided, and the safety of the battery can be improved.

In some embodiments, the second wall is provided with a pressure relief region corresponding to the pressure relief mechanism, the pressure relief region is used to form at least part of the second passage, and then the emissions can be discharged from the electrical cavity through the pressure relief region. For example, the emissions may be discharged to a collection cavity through the pressure relief region.

In some embodiments, the pressure relief region is a through hole penetrating through the second wall in a direction perpendicular to the first wall. When the pressure relief region is a through hole, on the one hand, it is convenient for processing, and on the other hand, the emissions discharged through the pressure relief mechanism can be quickly released.

In some embodiments, the pressure relief region satisfies:

$$5 \times 10^{-5} \, \text{mm}^{-1} \leq \frac{D}{S} \leq 0.6 \, \text{mm}^{-1}$$

wherein S is the area of the orthographic projection of the pressure relief region on the second wall divided by the number of pressure relief mechanisms corresponding to the pressure relief region, and D is the distance between the second wall and the first wall.

If D/S is too large, for example, exceeds the above-mentioned limit, the parameter D may be at the maximum value, and the parameter S may be at the minimum value. In this case, the first passage to the electrical cavity is large and the second passage through which the emissions are discharged from the electrical cavity is relatively small. As a result, the emissions discharged from the thermal runaway are very easy to return to the electrical cavity, that is, more emissions enter the electrical cavity, while less emissions exit the electrical cavity, which is not conducive to collection of emissions using the collecting cavity, but may affect the safety of the electrical cavity, for example, easily lead to the short circuit of the bus components. Therefore, in order to ensure that most of the emissions are discharged from the electrical cavity, for example, can enter the collection cavity, the parameter D/S should not be set too large.

On the contrary, if D/S is too small, for example, exceeds the above limit, the parameter D may be at the minimum value, while S is at the maximum value. In this case, the first passage to the electrical cavity is small, and it is difficult for the emissions of thermal runaway to return to the electrical cavity, and the first passage is difficult to function, so the pressure relief region corresponding to the parameter S may not be able to ensure the frame structure strength of the battery while discharging a large amount of emissions from the electrical cavity. Therefore, D/S should not be too small either.

In some embodiments, the battery further includes: a second spacing structure arranged between two adjacent battery cells in the battery; the second spacing structure is used to form at least part of the first passage, and the pressure relief region satisfies:

$$5 \times 10^{-5} \, \text{mm}^{-1} \leq \frac{t}{S} \leq 1.2 \, \text{mm}^{-1}$$

wherein S is the area of the orthographic projection of the pressure relief region on the second wall divided by the number of pressure relief mechanisms corresponding to the pressure relief region, and t is the distance between the two battery cells.

It should be understood that if the parameter t/S is too large, for example, exceeds the above-mentioned limit, the parameter t may be at the maximum value, and S may be at the minimum value. In this case, the first passage to the electrical cavity is large and the second passage through which the emissions are discharged from the electrical cavity is relatively small. As a result, the emissions discharged from the thermal runaway are very easy to return to the electrical cavity, that is, more emissions enter the electrical cavity, while less emissions exit the electrical cavity, which is not conducive to collection of emissions using the collecting cavity, but may affect the safety of the electrical cavity, for example, easily lead to the short circuit of the bus components. Therefore, in order to ensure that most of the emissions are discharged from the electrical cavity, for example, can enter the collection cavity, the parameter t/S should not be set too large.

On the contrary, if t/S is too small, for example, exceeds the above limit, the parameter t may be at the minimum value, while S is at the maximum value. In this case, the first passage to the electrical cavity is small, and it is difficult for the emissions of thermal runaway to return to the electrical cavity, and the first passage is difficult to function, so the pressure relief region corresponding to the parameter S may not be able to ensure the frame structure strength of the battery while discharging a large amount of emissions from the electrical cavity. Therefore, t/S should not be too small either.

In some embodiments, the pressure relief region is a weak region of the second wall, and the weak region is configured to be damaged upon actuation of the pressure relief mechanism to form at least part of the second passage.

Setting the pressure relief region as a weak region can make the second wall in a sealed state when the pressure relief mechanism is not actuated, for example, during normal use of the battery, which effectively protects the pressure relief mechanism from being damaged by external force and failing. Also, upon actuation of the pressure relief mechanism, the weak region can be damaged so that the emissions from a battery cell provided with the pressure relief mechanism pass through the weak region and exit the electrical cavity, for example, may pass through the weak region and enter the collection cavity.

In some embodiments, the pressure relief region satisfies:

$$0.05 \le \frac{D}{d} \le 30$$

wherein d is the minimum value of the thicknesses at different positions in the weak region; and D is the distance between the second wall and the first wall.

It should be understood that when the parameter D increases, the first passage to the electrical cavity increases, and the emissions discharged from thermal runaway are very easy to return to the electrical cavity, so the corresponding parameter d should be designed to decrease, thereby reducing the difficulty of the emissions breaking through the pressure relief region, that is, reducing the difficulty of discharging the emissions from the electrical cavity, so that the emissions can be more easily discharged from the electrical cavity. Therefore, when the parameter d cannot be too small in order to meet the discharge requirements of emissions and be compatible with the structural strength requirements of the battery, the parameter D should not be set too large, that is, D/d should not be set too large.

On the contrary, when D is at the minimum value, the first passage to the electrical cavity is small, and it is difficult for the emissions of thermal runaway to return to the electrical cavity, and the first passage is difficult to function, so a large amount of emissions need to exit through the pressure relief region of the second wall. The value of parameter d should ensure that the second wall can be smoothly and quickly broken through by the discharged emissions, so the value of d should also not be too large, that is, the value of D/d should not be too small.

In some embodiments, the battery further includes: a second spacing structure arranged between two adjacent battery cells in the battery; the second spacing structure is used to form at least part of the first passage, and the pressure relief region satisfies:

$$0.05 \le \frac{t}{d} \le 60$$

wherein d is the minimum value of the thicknesses at different positions in the weak region; and t is the distance between the two battery cells.

It should be understood that when the parameter t increases, the first passage to the electrical cavity increases, and the emissions discharged from thermal runaway are very easy to return to the electrical cavity, so the corresponding parameter d should be designed to decrease, thereby reducing the difficulty of the emissions breaking through the pressure relief region, that is, reducing the difficulty of discharging the emissions from the electrical cavity, so that the emissions can be more easily discharged from the electrical cavity. Therefore, when the parameter d cannot be too small in order to meet the discharge requirements of emissions and be compatible with the structural strength requirements of the battery, the parameter t should not be set too large, that is, t/d should not be set too large.

On the contrary, when t is at the minimum value, the first passage to the electrical cavity is small, and it is difficult for the emissions of thermal runaway to return to the electrical cavity, and the first passage is difficult to function, so a large amount of emissions need to exit through the pressure relief region of the second wall. The value of parameter d should ensure that the second wall can be smoothly and quickly broken through by the discharged emissions, so the value of d should also not be too large, that is, the value of t/d should not be too small.

In some embodiments, the box body further includes: a collection cavity for collecting the emissions discharged through the second passage when the pressure relief mechanism is actuated.

The collection cavity can centrally collect and/or treat the emissions, and then discharge the emissions to the outside of the battery. For example, the collection cavity may contain a liquid, such as a cooling medium, or a component for accommodating the liquid may be provided to further cool the emissions entering the collection cavity.

In some embodiments, the battery further comprises: an isolation component for isolating the electrical cavity and the collection cavity. Isolation components are used to isolate the electrical cavity and the collection cavity, that is to say, the electrical cavity for accommodating the battery cells and the bus components is separated from the collection cavity for collecting the emissions, so as to avoid mutual influence between the two.

In a second aspect, provided is an electrical device comprising the battery according to the first aspect, and the battery is used to supply electric energy to the electrical device.

In some embodiments, the electrical device is a vehicle, ship or spacecraft.

## DESCRIPTION OF DRAWINGS

In order to illustrate the technical solutions of the embodiments of the present application more clearly, the following briefly introduces the drawings to be used in the embodiments of the present application. Obviously, the drawings described below are only some examples of the present application. For those of ordinary skill in the art, other drawings can also be obtained according to the drawings without any creative effort.

Fig. 1 is a schematic structural diagram of a vehicle disclosed in an embodiment of the present application;

Fig. 2 is a schematic structural diagram of a battery disclosed in an embodiment of the present application;

Fig. 3 is a schematic exploded structural diagram of a battery disclosed in an embodiment of the present application;

Fig. 4 is a schematic cross-sectional diagram of a battery disclosed in an embodiment of the present application;

Fig. 5 is an enlarged partial sectional view of a battery disclosed in an embodiment of the present application;

Fig. 6 is a schematic cross-sectional diagram of another battery disclosed in an embodiment of the present application;

Fig. 7 is an enlarged partial sectional view of another battery disclosed in an embodiment of the present application;

Fig. 8 is a schematic partial structural diagram of a battery disclosed in an embodiment of the present application;

Fig. 9 is an enlarged partial structural view of a battery disclosed in an embodiment of the present application;

Fig. 10 is an enlarged partial structural view of another battery disclosed in an embodiment of the present application;

Fig. 11 is a schematic partial structural diagram of another battery disclosed in an embodiment of the present application;

Fig. 12 is a schematic partial structural diagram of another battery disclosed in an embodiment of the present application;

Fig. 13 is an enlarged partial structural view of another battery disclosed in an embodiment of the present application;

Fig. 14 is a schematic partial structural diagram of yet another battery disclosed in an embodiment of the present application;

Fig. 15 is an enlarged partial structural view of yet another battery disclosed in an embodiment of the present application;

Fig. 16 is a schematic exploded structural diagram of another battery disclosed in an embodiment of the present application;

Fig. 17 is a schematic cross-sectional diagram of another battery disclosed in an embodiment of the present application;

Fig. 18 is a schematic diagram of a connecting structure disclosed in an embodiment of the present application;

Fig. 19 is a schematic diagram of a connecting structure and a second wall disclosed in an embodiment of the present application;

Fig. 20 is a schematic exploded structural diagram of yet another battery disclosed in an embodiment of the present application;

Fig. 21 is a schematic cross-sectional diagram of yet another battery disclosed in an embodiment of the present application;

Fig. 22 is a schematic partial cross-sectional diagram of yet another battery disclosed in an embodiment of the present application;

Fig. 23 is a schematic partial structural diagram of yet another battery disclosed in an embodiment of the present application;

Figs. 24 to 27 are schematic structural diagrams of several second spacing structures disclosed in embodiments of the present application respectively;

Fig. 28 is a schematic partial cross-sectional diagram of yet another battery disclosed in an embodiment of the present application;

Fig. 29 is a schematic diagram of a second wall disclosed in an embodiment of the present application.

In the drawings, the drawings are not drawn to actual scale.

## DETAILED DESCRIPTION

The implementations of the present application are to be further described in detail below with reference to drawings and embodiments. The following detailed description of the embodiments and the drawings are used to illustrate the principles of the present application by way of example, but should not be used to limit the scope of the present application, that is, the present application is not limited to the described embodiments.

In the description of the present application, it should be noted that, unless otherwise stated, "plurality of" means two or more; the orientation or positional relationships indicated by the terms "upper", "lower", "left", "right", "inner" and "outer" are only for facilitating the description of the present application and simplifying the description, rather than indicating or implying that the apparatus or element referred to must have a particular orientation or be constructed and operated in a particular orientation, and therefore will not be interpreted as limiting the present application. In addition, the terms "first", "second", "third" and so on are used for descriptive purposes only, and cannot be construed as indicating or implying relative importance. "Perpendicular" is not strictly perpendicular, but within the allowable range of error. "Parallel" is not strictly parallel, but within the allowable range of error.

The orientation words appearing in the following description are the directions shown in the drawings, and do not limit the specific structure of the present application. In the description of the present application, it should be noted that the terms "mounting", "connecting", and "joining" should be understood in a broad sense, unless otherwise explicitly specified or defined. For example, it may be a fixed connection, a detachable connection, or an integrated connection; and it may be a direct connection or an indirect connection through an intermediate medium. For those of ordinary skill in the art, the specific meanings of the above terms in the present application may be understood according to specific circumstances.

In the embodiments of the present application, the same reference numerals denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length and width of integrated devices, are for illustrative purposes only, and should not constitute any limitation to the present application.

In the present application, the battery cell may comprise a lithium-ion secondary battery, a lithium-ion primary battery, a lithium-sulfur battery, a sodium-lithium-ion battery, a sodium-ion battery, a magnesium-ion battery, or the like, without limitation in the embodiments of the present application. The battery cells may be cylindrical, flat, rectangular, or in other shapes, which is not limited in the embodiments of the present application. The battery cells are generally divided into three types according to packaging manners: cylindrical battery cells, rectangular battery cells, and pouch cells, which are not limited in the embodiments of the present application.

The battery mentioned in the embodiments of the present application refers to a single physical module comprising one or more battery cells to provide a higher voltage and capacity. For example, the battery mentioned in the present application may include a battery module, a battery pack, or the like. The battery generally comprises a box body for encapsulating one or more battery cells. The box body can prevent liquids or other foreign matters from affecting the charging or discharging of the battery cells.

The battery cell includes an electrode assembly and an electrolyte solution, and the electrode assembly is composed of a positive electrode plate, a negative electrode plate and a separator. The battery cell works mainly relying on the movement of metal ions between the positive electrode plate and the negative electrode plate. The positive electrode plate includes a positive electrode current collector and a positive electrode active material layer. A surface of the positive electrode current collector is coated with the positive electrode active material layer. Current collectors not coated with the positive electrode active material layer protrude from the current collector coated with the positive electrode active material layer. The current collectors not coated with the positive electrode active material layer serve as positive electrode tabs. Taking a lithium-ion battery as an example, the material of the positive current collector may be aluminum, and the positive active material may be lithium cobalt oxide, lithium iron phosphate, ternary lithium, lithium manganate, or the like. The negative electrode plate includes a negative electrode current collector and a negative electrode active material layer. The negative electrode active material layer is coated on a surface of the negative electrode current collector, and the current collector not coated with the negative electrode active material layer protrudes from the current collector coated with the negative electrode active material layer and is used as a negative electrode tab. The material of the negative electrode current collector may be copper, and the negative electrode active material may be carbon, silicon, or the like. In order to ensure that no fusing occurs when a large current passes, there are a plurality of positive electrode tabs which are stacked together, and there are a plurality of negative electrode tabs which are stacked together. The separator may be made from polypropylene (PP), polyethylene (PE), or the like. In addition, the electrode assembly may be of a wound structure or a laminated structure, which is not limited in the embodiments of the present application.

Many design factors, such as energy density, cycle life, discharge capacity, charge-discharge rate and other performance parameters, should be considered in the development of the battery technology. In addition, the safety of the battery also needs to be taken into account. For the battery, the main safety hazard comes from the charging and discharging process. In order to improve the safety performance of the battery, a pressure relief mechanism is generally provided in the battery cell. The pressure relief mechanism refers to an element or component that is actuated to relieve the internal pressure or temperature when the internal pressure or temperature of the battery cell reaches a predetermined threshold. The predetermined threshold can be adjusted according to different design requirements. For example, the predetermined threshold may depend on the material of one or more of the positive electrode plate, the negative electrode plate, the electrolyte solution, and the separator in the battery cell. The pressure relief mechanism can adopt elements or components that are sensitive to pressure or temperature. That is, when the internal pressure or temperature of the battery cell reaches the predetermined threshold, the pressure relief mechanism is actuated, thereby forming a channel for releasing internal pressure or temperature.

In the current design scheme of the pressure relief mechanism, the main concern is to release the high pressure and high heat inside the battery cell, that is, to discharge the emissions of the battery cell to the outside of the battery cell. However, how to discharge the high-temperature and high-pressure emissions after being discharged from the battery cells so as not to cause further safety problems to the battery, is one of the problems that need to be solved urgently.

When thermal runaway or other abnormal conditions occur in the battery cell, the high-temperature and high-pressure emissions generated inside the battery cell is discharged toward the direction where the battery cell is equipped with the pressure relief mechanism. Such emissions are usually very powerful and destructive, and if only one passage is provided, the emissions are likely to break through one or more structures on or around the passage, causing further safety issues. In view of this, the present application provides a battery, the box body of the battery includes an electrical cavity, and the battery further includes a first passage and a second passage; wherein the electrical cavity is used to accommodate a battery cell, and a first wall of the battery cell is provided with a pressure relief mechanism. Upon actuation of the pressure relief mechanism, the first passage and the second passage can communicate with the inside of the battery cell through the pressure relief mechanism. The first passage is used to discharge the emissions discharged from the pressure relief mechanism to the electrical cavity, and the second passage is used to discharge the emissions discharged from the pressure relief mechanism out of the electrical cavity. That is, the emissions discharged through the pressure relief mechanism can be discharged through two passages simultaneously, which can speed up the discharge and reduce the risk of explosion of the battery.

The technical solutions described in the embodiments of the application are applicable to various electrical devicees using batteries.

The electrical device may be, but not limited to, a vehicle, a mobile phone, a portable device, a laptop computer, a ship, a spacecraft, an electric toy, an electric tool, and the like. The vehicle may be a fuel vehicle, a gas vehicle or a new energy vehicle. The new energy vehicle may be an all-electric vehicle, a hybrid electric vehicle, an extended-range electric vehicle, or the like. The spacecraft includes airplanes, rockets, space shuttles, spaceships, and the like. The electric toy includes fixed or mobile electric toys, such as game consoles, electric car toys, electric ship toys and electric aircraft toys. The electric tool includes metal cutting electric tools, grinding electric tools, assembly electric tools and railway electric tools, such as electric drills, electric grinders, electric wrenches, electric screwdrivers, electric hammers, impact drills, concrete vibrators and electric planers. The electrical device is not specially limited in the embodiments of the present application.

In the following embodiments, for convenience of description, the electrical device being a vehicle is taken as an example for description.

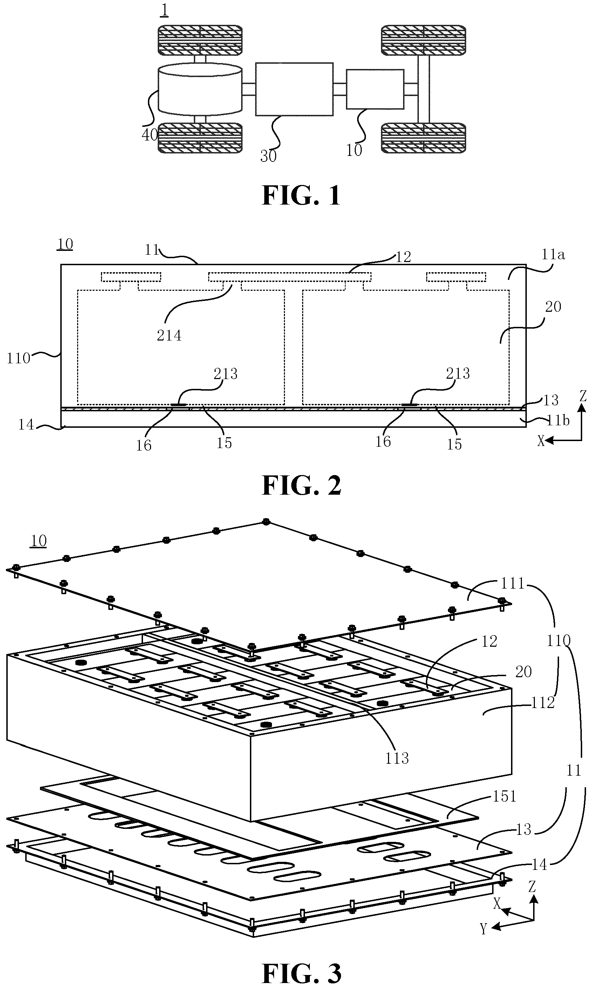

For example, as shown in Fig.1, a schematic structural diagram of a vehicle 1 according to an example of the present application is shown. The vehicle 1 may be a fuel vehicle, a gas vehicle, or a new energy vehicle, and the new energy vehicle may be an all-electric vehicle, a hybrid electric vehicle, an extended range electric vehicle, or the like. A motor 40, a controller 30 and a battery 10 may be provided inside the vehicle 1, and the controller 30 is configured to control the battery 10 to supply power to the motor 40. For example, the battery 10 may be arranged at the bottom or the head or the tail of the vehicle 1. The battery 10 may be configured to supply power to the vehicle 1, for example, the battery 10 may be used as an operating power source of the vehicle 1, which is used for a circuit system of the vehicle 1, for example, for operation power requirements of the vehicle 1 during starting, navigation and running. In another example of the present application, the battery 10 can not only be used as the operating power source of the vehicle 1, but also can be used as a driving power source of the vehicle 1 to provide driving power for the vehicle 1 instead of or partially instead of fuel or natural gas.

In order to meet different power requirements, the battery may include a plurality of battery cells, wherein the plurality of battery cells may be in series connection, in parallel connection, or in parallel-series connection, and the parallel-series connection refers to mixing of the series connection and the parallel connection. The battery may also be called a battery pack. For example, the plurality of battery cells may be in series, parallel or series-parallel connection to form battery modules first, and then the plurality of battery modules may be in series, parallel or series-parallel connection to form the battery. That is to say, the plurality of battery cells may directly form a battery, or may form battery modules first, and then the battery modules form a battery.

Fig. 2 is a schematic diagram of a battery 10 according to an embodiment of the present application. As shown in Fig. 2, the battery 10 may comprise: a box body 11 including an electrical cavity 11a; a battery cell 20 accommodated in the electrical cavity 11a, a first wall 21a of the battery cell 20 being provided with a pressure relief mechanism 213; a first passage 15 and a second passage 16, the first passage 15 and the second passage 16 being configured to be able to communicate with the inside of the battery cell 20 through the pressure relief mechanism 213 when the pressure relief mechanism 213 is actuated, wherein the first passage 15 is used to discharge the emissions discharged from the pressure relief mechanism 213 to the electrical cavity 11a, and the second passage 16 is used to discharge the emissions discharged from the pressure relief mechanism 213 out of the electrical cavity 11a.

It should be understood that the pressure relief mechanism 213 of the embodiment of the present application refers to an element or component that is actuated to relieve the internal pressure or temperature when the internal pressure or temperature of the battery cell 20 reaches a predetermined threshold. The design of the threshold varies according to different design requirements. The threshold may depend on the material of one or more of the positive electrode plate, the negative electrode plate, the electrolyte solution, and the separator in the battery cell 20.

The "actuate" mentioned in the present application means that the pressure relief mechanism 213 performs an action or is activated to a certain state, so that the internal pressure and temperature of the battery cell 20 can be relieved. Actions produced by the pressure relief mechanism 213 may include, but are not limited to, at least a part of the pressure relief mechanism 213 being broken, crushed, torn or opened, and the like. When the pressure relief mechanism 213 is actuated, high temperature and high pressure substances inside the battery cell 20 may be discharged outward as emissions from the actuated part. In this way, the pressure and temperature of the battery cell 20 can be relieved under controllable pressure or temperature, so as to prevent potential more serious accidents.

The emissions from the battery cell 20 mentioned in the present application include, but are not limited to, the electrolyte solution, dissolved or split positive and negative electrode plates, fragments of the separator, high temperature and high pressure gas generated by reaction, flames, and the like.

The pressure relief mechanism 213 in the embodiments of the present application is provided on the first wall 21a of the battery cell 20. The pressure relief mechanism 213 may be a part of the first wall 21a, or may be a separate structure from the first wall 21a. For example, it is fixed on the first wall 21a by welding. For example, when the pressure relief mechanism 213 is a part of the first wall 21a, for example, the pressure relief mechanism 213 can be formed by providing a notch on the first wall 21a, and the thickness of the first wall 21a corresponding to the notch is less than the thickness of other regions of the pressure relief mechanism 213 except the notch. The notch is the weakest position of the pressure relief mechanism 213. When the gas generated by the battery cell 20 is too much so that the internal pressure of the case 211 rises and reaches a threshold value or when the heat generated by the internal reaction of the battery cell 20 causes the internal temperature of the battery cell 20 to rise and reach a threshold value, the pressure relief mechanism 213 can be broken at the notch, which leads to communication between the inside and outside of the case 211, and the gas pressure and temperature are released outward through the crack of the pressure relief mechanism 213, thereby avoiding explosion of the battery cell 20.

For another example, the pressure relief mechanism 213 may be a structure separated from the first wall 21a. The pressure relief mechanism 213 may take the form of an explosion-proof valve, a gas valve, a pressure relief valve or a safety valve, etc., and may specifically adopt a pressure-sensitive or temperature-sensitive element or structure. That is, when the internal pressure or temperature of the battery cell 20 reaches a predetermined threshold, the pressure relief mechanism 213 performs an action or a weak structure provided in the pressure relief mechanism 213 is damaged, so as to form an opening or channel for releasing the internal pressure or temperature.

It should be understood that, as shown in Fig. 2, the electrical cavity 11a in the embodiments of the present application is used to accommodate the battery cells 20, that is, the electrical cavity 11a provides a mounting space for the battery cells 20. The electrical cavity 11a may be sealed or unsealed. The shape of the electrical cavity 11a may depend on the one or more battery cells 20 and bus components 12 accommodated therein. For example, Fig. 2 takes the electrical cavity 11a as a cuboid as an example, but the embodiments of the present application are not limited thereto.

When thermal runaway or other abnormal conditions occur in the battery cell 20, the high-temperature and high-pressure emissions generated inside the battery cell are discharged toward the direction where the battery cell 20 is equipped with the pressure relief mechanism 213. Such emissions are usually very powerful and destructive, and if only one passage is provided, the emissions are likely to break the structure of the passage or one or more structures around the passage, causing further safety issues. Therefore, the box body 11 of the battery 10 of the embodiments of the present application includes an electrical cavity 11a to accommodate the battery cells, and the battery 10 further includes a first passage 15 and a second passage 16. The first passage 15 and the second passage 16 can communicate with the inside of the battery cell 20 through the pressure relief mechanism 213 upon actuation of the pressure relief mechanism 213. The first passage 15 can discharge the emissions discharged from the pressure relief mechanism 213 to the electrical cavity 11a, and the second passage 16 is used to discharge the emissions discharged from the pressure relief mechanism 213 out of the electrical cavity 11a. In this way, the emissions discharged through the pressure relief mechanism 213 can be discharged through two passages simultaneously, which can speed up the discharge and reduce the risk of explosion of the battery 10.

It should be understood that, as shown in Fig. 2, the electrical cavity 11a in the embodiments of the present application can also be used to accommodate a bus component 12, that is, the electrical cavity 11a provides a mounting space for the battery cell 20 and the bus component 12. The bus component 12 is configured to realize electrical connection between a plurality of battery cells 20, such as parallel connection, series connection or series-parallel connection. The bus component 12 may realize electrical connection between the battery cells 20 by connecting the electrode terminals 214 of the battery cells 20. In some embodiments, the bus component 12 may be fixed to the electrode terminals 214 of the battery cells 20 by welding.

The battery cell 20 may include two electrode terminals 214, and the electrode terminals 214 are a positive electrode terminal 214a and a negative electrode terminal 214b, respectively. The electrode terminal 214 in the embodiments of the present application is used to electrically connect with the tab of the electrode assembly inside the battery cell 20 to output electric energy. The two electrode terminals 214 in the embodiments of the present application may be arranged on the same wall or different walls of the battery cell 20.

Optionally, as shown in Fig. 2, the box body 11 of the embodiment of the present application may further include: a collection cavity 11b for collecting and/or treating the emissions discharged through the second passage 16 when the pressure relief mechanism 213 is actuated, and then discharging the emissions to the outside of the battery 10. The collection cavity 11b is used to collect the emissions and may be sealed or unsealed. In some embodiments, the collection cavity 11b may contain air or other gases. Optionally, the collection cavity 11b may contain a liquid, such as a cooling medium, or a component for accommodating the liquid may be provided to further cool the emissions entering the collection cavity 11b. Further optionally, the gas or liquid in the collection cavity 11b is circulated.

Optionally, as shown in Fig. 2, the battery 10 in the embodiments of the present application further includes: an isolation component 13 for isolating the electrical cavity 11a and the collection cavity 11b. The so-called "isolation" here refers to separation, which may not be hermetically sealed. Specifically, the electrical cavity 11a and the collection cavity 11b are isolated by the isolation component 13, that is, the electrical cavity 11a for accommodating the battery cells 20 and the bus component 12 is separated from the collection cavity 11b for collecting the emissions.

In the embodiments of the present application, the isolation component 13 includes a common wall of the electrical cavity 11a and the collection cavity 11b. As shown in Fig. 2, the isolation component 13 (or a part thereof) can be directly used as the common wall of the electrical cavity 11a and the collection cavity 11b, so that the distance between the electrical cavity 11a and the collection cavity 11b can be reduced as much as possible, thereby saving space and improving the space utilization of the box body 11.

Optionally, the isolation component 13 in the embodiments of the present application may be a thermal management component, and the thermal management component is used to regulate the temperature of the battery cells 20. Specifically, the isolation component 13 can be used to contain a fluid to regulate the temperature of the battery cells 20. In the case of cooling the battery cell 20, the isolation component 13 can contain a cooling medium to adjust the temperature of the battery cell 20. In this case, the isolation component 13 can also be called a cooling component, a cooling system, or a cooling plate. In addition, the isolation component 13 can also be used for heating, which is not limited in the embodiments of the present application. Optionally, the fluid in the isolation component 13 may flow in a circulating manner to achieve a better temperature regulation effect.

It should be understood that the box body 11 in the embodiments of the present application may be implemented in various ways, which is not limited in the embodiments of the present application. For example, taking Fig. 2 as an example, for the electrical cavity 11a, the box body 11 may include a first cover body 110 with an opening, and the isolation component 13 covers the opening of the first cover body 110, so that the wall for forming the electrical cavity 11a includes the first cover body 110 and the isolation component 13. Among them, the first cover body 110 can also be realized in various ways. For example, the first cover body 110 can be a hollow integral structure with an open end; or, the first cover body 110 can also include a first part and a second part with openings on opposite sides, the first part covers the opening on one side of the second part to form the first cover body 110 with an end open, and the isolation component 13 covers the opening on other side of the second part to form the electrical cavity 11a. For the corresponding collection cavity 11b, the box body 11 can also include: a guard member 14. The guard member 14 is used to protect the isolation component 13, and the guard member 14 can form the collection cavity 11b with the isolation component 13, that is, the wall of the collection cavity 11b includes the guard member 14 and the isolation component 13.

For another example, unlike the above-mentioned way shown in Fig. 2, the box body 11 may also include a closed second cover body, and the second cover body may be used to form the electrical cavity 11a; or, by providing the isolation component 13 inside the cover body, the electrical cavity 11a is isolated from the interior of the cover body, and further, the collection cavity 11b can also be isolated. Among others, the second cover body can also be realized in various ways. For example, the second cover body can include a third part and a fourth part, one side of the fourth part has an opening to form a semi-closed structure, the isolation component 13 is provided inside the fourth part, and the third part covers the opening of the fourth part to form the closed second cover body.

For ease of description, the present application mainly uses the case 11 as shown in Fig. 2 as an example for description, and the embodiments of the present application are not limited thereto. Next, the battery 10 of the embodiments of the present application will be described in detail with reference to the drawings.

Fig. 3 is a schematic exploded structural diagram of a battery 10 according to an embodiment of the present application. As shown in Fig. 3, the battery 10 of the embodiment of the present application may comprise: a box body 11, the box body 11 including a first cover body 110, an isolation component 13 and a guard member 14, wherein the first cover body 110 and the isolation component 13 can be used to form the electrical cavity 11a, and the isolation component 13 and the guard member 14 can be used to form the collection cavity 11b. Specifically, as shown in Fig. 3, the first cover body 110 also includes a first part 111 and a second part 112 with openings on opposite sides, wherein the first part 111 is used to cover the opening on one side of the second part 112 to form the first cover body 110 with an open end, and the isolation component 13 is used to cover the opening on other side of the second part 112 to form the electrical cavity 11a.

In the embodiments of the present application, the electrical cavity 11a has a plurality of walls, the pressure relief mechanism 213 is arranged on a first wall 21a of the battery cell 20, and the first wall 21a can be any wall of the battery cell 20 facing the electrical cavity 11a. It should be understood that the shape of the battery cell 20 in the embodiments of the present application may be set according to practical applications. For example, the present application mainly takes the rectangular battery cell 20 as an example for description, but the embodiments of the present application are not limited thereto. For example, the battery cell 20 may also be a cylinder or of other shapes. The first wall 21a is a wall of the battery cell 20.

For example, the electrical cavity 11a includes a second wall 11c, and the first wall 21a faces the second wall 11c. In this way, the pressure relief mechanism 213 of the battery cell 20 faces the wall of the electrical cavity 11a instead of facing other battery cells 20, so that it is convenient to arrange an avoidance structure on the wall of the electrical cavity 11a to provide a deformation avoidance space for the pressure relief mechanism 213, which can improve the space utilization of the battery 10, and can also reduce the risk of thermal runaway of other battery cells 20 caused by thermal runaway of a battery cell 20, thereby improving the safety of the battery 10.

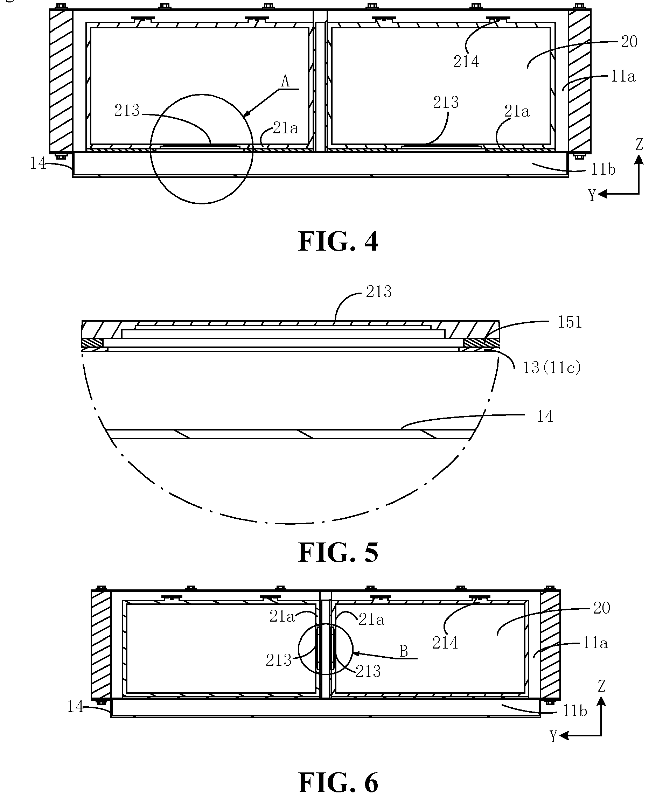

For example, taken as an example, in Fig. 3, the pressure relief mechanism 213 is arranged on the wall of the battery cell 20 facing the isolation component 13, that is, the second wall 11c is the isolation component 13. Specifically, Fig. 4 shows a schematic cross-sectional diagram of the battery 10 as shown in Fig. 3, and the cross-section is perpendicular to the isolation component 13; Fig. 5 shows a schematic enlarged diagram of a region A in Fig. 4. As shown in Figs. 4 and 5, the pressure relief mechanism 213 is arranged on the first wall 21a of the battery cell 20, the first wall 21a is the bottom wall of the battery cell 20; the second wall 11c of the electrical cavity 11a is the isolation component 13, and the first wall 21a faces the isolation component 13.

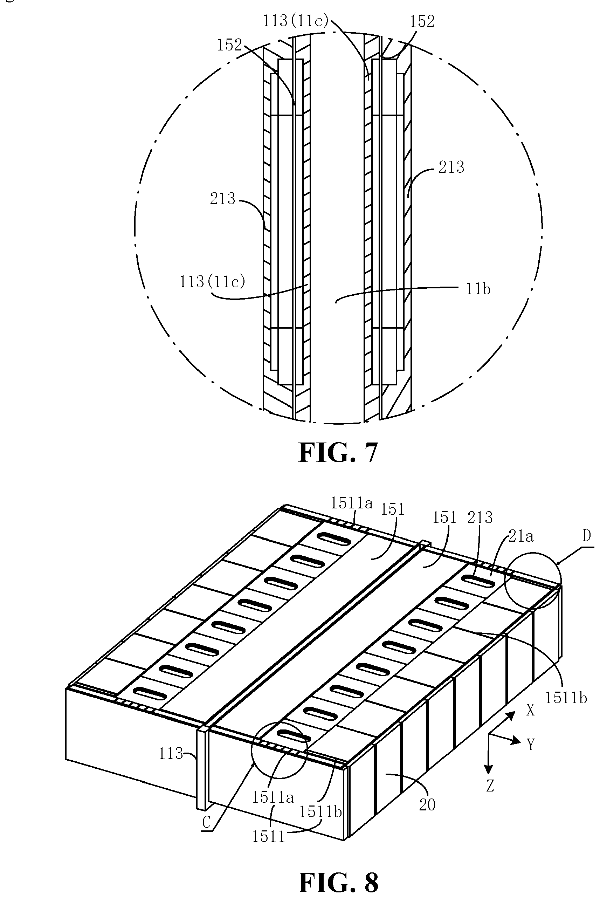

For another example, different from Figs. 3 to 5, Fig. 6 shows a cross-sectional view of a battery 10 according to another embodiment of the present application, and the cross-section is perpendicular to the isolation component 13. For example, the direction of the cross-section shown in Fig. 6 may be the same as that in Fig. 4. Fig. 7 shows a schematic enlarged diagram of a region B in Fig. 6. As shown in Figs. 6 and 7, the box body 11 further includes at least one beam 113, the beam 113 is located between a plurality of battery cells 20, and the beam 113 can be used to increase the structural strength of the box body 11. In addition, the beam 113 can also be used to divide the electrical cavity 11a into at least two sub-electrical cavities. For example, when a beam 113 is arranged in the box body 11 of Figs. 6 and 7, the beam 113 can divide the electric cavity 11a into left and right sub-electrical cavities, then the beam 113 can also be regarded as a wall of the electric cavity 11a.

As shown in Figs. 6 and 7, the second wall 11 c of the electrical cavity 11a can also be a beam 133, that is, the pressure relief mechanism 213 of the battery cell 20 faces the beam 113. Specifically, the beam 113 may be a hollow structure, and the hollow structure may be used to form the collection cavity 11b, that is, the beam 113 includes a common wall of the electrical cavity 11a and the collection cavity 11b. Specifically, as shown in Figs. 6 and 7, the isolation component 13 and the guard member 14 can be used to form a part of the collection cavity 11b, and the hollow structure of the beam 113 can also be used to form a part of the collection cavity 11b. That is, the part of the collection cavity 11b formed by the isolation component 13 and the guard member 14 communicates with the hollow structure of the beam 113. Then, when the pressure relief mechanism 213 is arranged towards the beam 113, that is, when the beam 113 acts as the second wall 11c facing the first wall 21a where the pressure relief mechanism 213 is located, the emissions discharged through the pressure relief mechanism 213 can pass through the beam 113 and enter the collection cavity 11b.

It should be understood that at least part of the first passage 15 in the embodiments of the present application may be arranged between the first wall 21a and the second wall 11c, wherein the first passage 15 may be realized in various ways. For example, as shown in Figs. 3 to 5, the battery 10 further comprises: a connecting structure 151; the connecting structure 151 is arranged between the first wall 21a and the second wall 11c, and the connecting structure 151 is used to form at least part of the first passage 15. Realizing at least part of the first passage 15 through the connecting structure 151 can, on the one hand, improve the structural stability between the first wall 21a and the second wall 11c, especially when the battery cell 20 does not have thermal runaway, the connecting structure 151 can be used to realize relative fixing between the first wall 21a and the second wall 11c, or can also realize the sealing between the first wall 21a and the second wall 11c; on the other hand, by reasonably setting the specific shape and position of the connecting structure 151, the position of the first passage 15 can be adjusted, and then the directional discharge of emissions through the first passage 15 is realized, and the safety of the battery 10 is improved.

For another example, as shown in Figs. 6 and 7, a first space 152 is provided between the second wall 11c and the first wall 21a, and the first passage 15 includes the first space 152. The first passage 15 is realized through the first space 152. On the one hand, it is easy to realize, and there is no need to add other components, which can save space; on the other hand, the first space 152 is provided between the first wall 21a and the second wall 11c, which can reduce the sealing requirements for the electrical cavity 11a, especially the sealing requirements for the second wall 11c, thereby reducing the difficulty of processing the battery 10 and improving the processing efficiency of the battery 10.

It should be understood that the way of realizing at least part of the first passage 15 through the connecting structure 151 and the way of realizing at least part of the first passage 15 through the first space 152 can be used alone or in combination with each other. For example, the first passage 15 can be realized through the connecting structure 151 and the first space 152 together. The embodiments of the present application are not limited thereto.

Next, the connecting structure 151 of the embodiment of the present application will be described in detail with reference to the drawings. Among others, for the convenience of description, the embodiments of the present application mainly uses the isolation component 13 as the second wall 11c as an example, but the embodiments of the present application are not limited thereto. The relevant description is also applicable to the case where the beam 113 is used as the second wall 11c, which, for brevity, will not be repeated here.

In the embodiments of the present application, the connecting structure 151 can realize at least part of the first passage 15 in various ways. For example, the connecting structure 151 of the embodiments of the present application is provided with a first flow channel 1511, and the first passage 15 includes the first flow channel 1511. The emissions discharged through the pressure relief mechanism 213 can be discharged into the electrical cavity 11a through the first flow channel 1511. In this way, by setting the position of the first flow channel 1511 reasonably, the directional discharge of the emissions can be realized, and the influence of the emissions on individual components in the electrical cavity 11a can be reduced, thereby improving the safety of the battery 10.

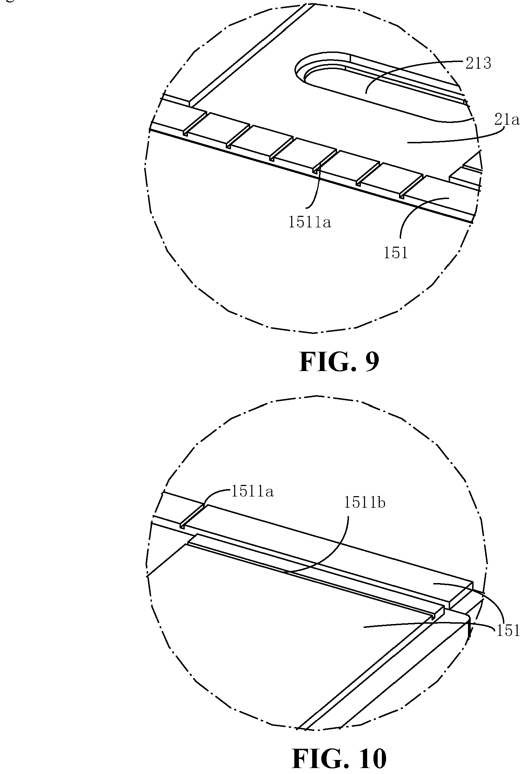

Specifically, Fig. 8 shows a schematic partial structural diagram of a battery 10 according to an embodiment of the present application. For example, Fig. 8 may be a schematic partial structural diagram of the battery 10 shown in Fig. 3, and Fig. 8 is a schematic plan view of the battery 10; Fig. 9 is an enlarged view of a region C in Fig. 8, and Fig. 10 is an enlarged view of a region D in Fig. 8. As shown in Figs. 8 to 10, the first flow channel 1511 of the embodiments of the present application includes through holes and/or grooves penetrating through the connecting structure 151, which not only facilitates processing, but also allows the emissions to pass through quickly.

It should be understood that the size of the first flow channel 1511 in the embodiments of the present application may be set according to actual applications. For example, the radial dimension of the first flow channel 1511 is less than or equal to 2 mm, and the radial direction is perpendicular to the flow direction of the emissions in the first flow channel 1511, so as to prevent the first flow channel 1511 from being too large in size, so that excessive emissions flowing through the first flow channel 1511 can be avoided, and the particle size of the emissions flowing through the first flow channel 1511 can also be prevented from being too large. This has a filtering effect on the emissions, thereby reducing the influence of the emissions of the battery cell 20 with thermal runaway on other battery cells 20, and avoiding the thermal diffusion of the battery 10 as much as possible. Specifically, if the first flow channel 1511 is a through hole, the radial dimension of the first flow channel 1511 can be the maximum value of the aperture of the first flow channel 1511; if the first flow channel 1511 is a groove, the radial dimension of the first flow channel 1511 may be the maximum value of the depth of the groove or the width of the groove, and the embodiments of the present application are not limited thereto.

It should be understood that fillers may be provided in the first flow channel 1511, and the fillers are used to seal the first flow channel 1511 when the pressure relief mechanism 213 is not actuated, and are damaged when the pressure relief mechanism 213 is actuated, so that the first flow channel 1511 is unblocked. In this way, when the thermal runaway of the battery cell 20 does not occur, the sealing performance of the electrical cavity 11a can be improved, so as to prevent the battery cell 20 from being affected or damaged. The material of the filler can be selected according to actual applications. For example, the material of the filler can include styrofoam and/or plastic, but the embodiments of the present application are not limited thereto.

In the embodiments of the present application, Figs. 8 to 10 take the first flow channel 1511 being a groove provided on the connecting structure 151 as an example. As shown in Figs. 8 to 10, the connecting structure 151 may include a plurality of first flow channels 1511, and the plurality of first flow channels 1511 may include: grooves provided on the surface of the connecting structure 151 facing the first wall 21a (that is, the opening of the groove faces the surface of the first wall 21a); and/or, grooves provided on the surface of the connecting structure 151 facing the second wall 11c (that is, the opening of the groove faces the second wall 11c).

In some embodiments, the connecting structure 151 is provided with a plurality of first flow channels 1511 extending along at least one direction, and the at least one direction is parallel to the first wall 21a. That is, a plurality of first flow channels 1511 extending in one or more directions are provided on the larger surface of the connecting structure 151. The arrangement of a plurality of first flow channels 1511 can disperse the discharge directions of the emissions, and avoid damage to components in a single direction when the high-temperature emissions are discharged toward that direction.

It should be understood that the extension direction of the first flow channel 1511 in the embodiments of the present application may be set according to actual applications. For example, according to the positional relationship between the electrode terminal 214 of the battery cell 20 and the pressure relief mechanism 213, the extension direction of the first flow channel 1511 can be reasonably set to avoid the influence of emissions on the electrode terminal 214 and the bus component 12 connected to the electrode terminal 214.

In some embodiments, as shown in Figs. 8 to 10, if the electrode terminal 214 and the pressure relief mechanism 213 are not located on the same wall, and the wall where the electrode terminal 214 is located does not intersect with the first wall 21a, for example, when the wall where the electrode terminal 214 is located is arranged opposite to the first wall 21a, the extension direction of the first flow channel 1511 may not be restricted. For example, the connecting structure 151 may be provided with one or more X-direction first flow channels 1511a extending along the first direction X; for another example, the connecting structure 151 may be provided with one or more Y-direction first flow channels 1511b extending along the second direction Y, wherein the first direction X and the second direction Y are perpendicular to each other; or, the connecting structure 151 may also include first flow channels 1511 in other directions, and the embodiments of the present application are not limited thereto.

In some embodiments, different from Figs. 8 to 10, if the electrode terminal 214 is arranged on the third wall 21b of the battery cell 20, and the third wall 21b intersects with the first wall 21a, at least one direction includes a first direction X. The first direction X is parallel to the third wall 21b, that is, the first direction X cannot be perpendicular to the third wall 21b, so as to prevent the emissions from flowing to the third wall 21b through the first flow channel 1511 and prevent the emissions from affecting the electrode terminal 214 on the third wall 21b. For example, the short circuit between different bus components 12 connecting the electrode terminals 214 caused by metal chips in the emissions can be avoided, thereby improving the safety of the battery 10.

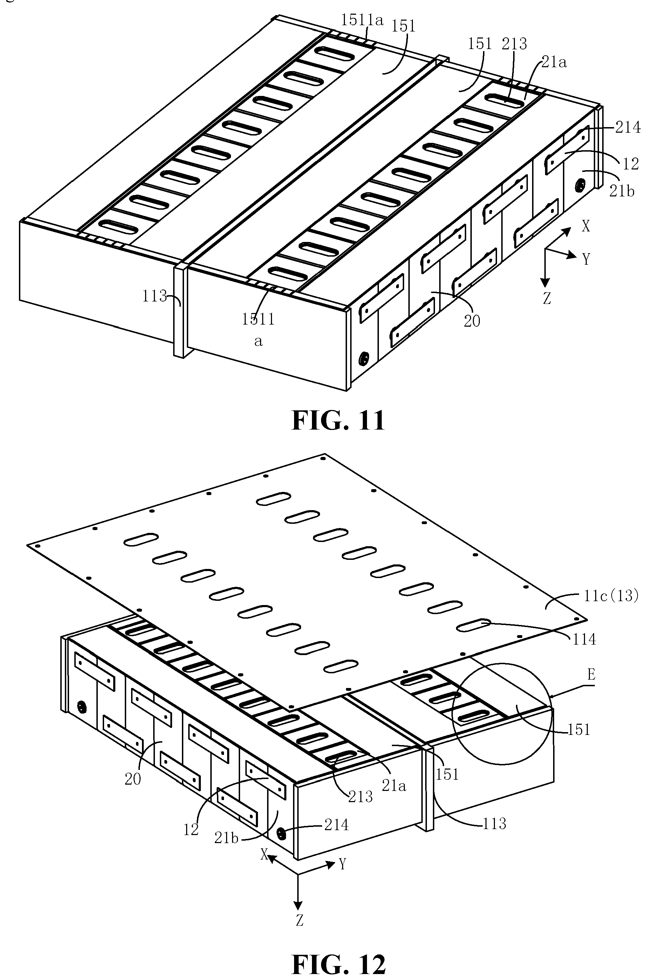

For example, Fig. 11 is another schematic partial structural diagram of a battery 10 according to an embodiment of the present application. As shown in Fig. 10, comparing with Fig. 8, it can be seen that the electrode terminal 214 is arranged on the third wall 21b of the battery cell 20 in Fig. 10, the connecting structure 151 does not include the Y-direction first flow channel 1511b extending in the second Y direction, the second direction Y is perpendicular to the third wall 21b, but the connecting structure 151 may include one or more X-direction first flow channels 1511a extending along the first direction X, and the first direction X is parallel to the third wall 21b.

It should be understood that, as shown in Figs. 8 to 11, the connecting structure 151 of the embodiment of the present application includes a thermal pad and/or a sealing pad arranged between the first wall 21a and the second wall 11c. Specifically, the connecting structure 151 includes a thermal pad arranged between the first wall 21a and the second wall 11c, and the thermal pad can dissipate heat for the battery cells 20 during the use of the battery 10. For example, when the second wall 11c is a thermal management component, the heat of the battery cell 20 can be transferred to the thermal management component through the thermal pad, so as to adjust the temperature of the battery cell 20 in time to ensure the normal use of the battery cell 20. For example, as shown in Figs. 8 to 10, the connecting structure 151 may include a thermal pad, and the thermal pad may be a part provided with a plurality of Y-direction first flow channels 1511b extending along the second direction Y in the figure.

In addition, when the connecting structure 151 includes a sealing pad, the sealing performance between the first wall 21a and the second wall 11c can be improved. For example, as shown in Figs. 8 to 11, the connecting structure 151 may include a sealing pad, and the sealing pad may be a part with a plurality of X-direction first flow channels 1511a extending along the first direction X in the figure. As shown in Figs. 8 to 11, the sealing pad can be arranged on at least one side edge of the thermal pad, for example, the sealing pad can be respectively arranged on the opposite two side edges of the thermal pad to improve the sealing between the first wall 21a and the second wall 11c.

It should be understood that the distance between the sealing pad and the thermal pad in the embodiments of the present application is less than or equal to 2 mm, so that the space between the sealing pad and the thermal pad can be used as the first flow channel 1511 to guide the emissions to discharge.

The material of the thermal pad and the material of the sealing pad in the embodiments of the present application can be selected according to the actual applications. For example, the material of the thermal pad may include thermal silica gel. For another example, the material of the sealing pad includes at least one of the following: silicone rubber, polypropylene (PP), polyfluoroalkoxy (PFA) and polyimide (PI).

In the embodiments of the present application, the connecting structure 151 can also form at least part of the first passage 15 in other ways. For example, the connecting structure 151 is configured to be damaged when the pressure relief mechanism 213 is actuated, so that a second space is formed between the first wall 21a and the second wall 11c, and the first passage 15 includes the second space. In this way, by reasonably selecting the material of the connecting structure 151, the connecting structure 151 can be damaged when the pressure relief mechanism 213 is actuated, thereby forming a second space without additional processing of the connecting structure 151, which is more convenient and can also ensure the sealing performance of the battery cell 20 during normal use.

Specifically, in the embodiments of the present application, the damage to the connecting structure 151 may include: at least part of the connecting structure 151 is damaged. For example, when the pressure relief mechanism 213 is actuated, only the outside of the connecting structure 151 may be damaged, and part of the internal components of the connecting structure 151 are exposed and not damaged; or, the internal structure of the connecting structure 151 is damaged, for example, the connecting structure 151 may be a multi-layer structure, and some structural layers in the multi-layer structure are damaged; or, the connecting structure 151 may be completely damaged, which is not limited in the embodiments of the present application.

It should be understood that the connecting structure 151 of the embodiments of the present application can be damaged when the pressure relief mechanism 213 is actuated, which can be achieved in various ways. For example, the connecting structure 151 may include a region of low structural strength, so that when the pressure relief mechanism 213 is actuated, the connecting structure 151 is damaged by the impact force of the emissions on the connecting structure 151.

For another example, the connecting structure 151 includes a melting layer arranged between the first wall 21a and the second wall 11c, and the melting layer is used to be melted upon actuation of the pressure relief mechanism 213, so that a second space is formed between the first wall 21a and the second wall 11c. Since the emissions discharged through the pressure relief mechanism 213 are high-temperature emissions, the melting layer can be melted upon thermal runaway of the battery cell 20 to form the second space, and it is not easily damaged during the normal use of the battery cell 20, which can ensure the safety and stability of the battery 10.

Optionally, the thickness of the melting layer can be set according to actual applications. For example, the thickness of the melting layer is 0.5 mm to 3 mm. That is, the thickness of the melting layer is usually greater than or equal to 0.5 mm, so as to prevent the second space formed after the melting layer is melted from being too small, or even failure to form an effective second space, thereby preventing the first passage 15 from being too small and hindering the discharge of the emissions, further avoiding explosion of the battery 10. In addition, the thickness of the melting layer is usually less than or equal to 3 mm, so as to avoid that when the thickness of the melting layer is too large, the melted part is too large, that is, the second space formed is too large, which will cause the discharge of a large amount of emissions into the electrical cavity 11a through the second space. This is likely to cause extensive damage to the electrical cavity 11a, and especially may cause short circuit of different bus components 12, thereby affecting the safety of the battery 10.

It should be understood that the connecting structure 151 in the embodiments of the present application may be a multi-layer structure along the thickness direction, and the melting layer may be located in any layer of the multi-layer structure. For example, the melting layer may include a binder for fixing. For example, as shown in Figs. 8 to 11, the connecting structure 151 may include a thermal pad, the thermal pad may be fixed to the first wall 21a of the battery cell 20 by a binder, and the binder may be damaged upon actuation of the pressure relief mechanism 213 to form the second space.

Optionally, the material of the binder in the embodiments of the present application may be set according to actual applications. For example, the material of the binder includes at least one of the following: epoxy structural adhesive, acrylate structural adhesive, polyimide structural adhesive, maleimide structural adhesive, polyurethane structural adhesive and acrylic adhesive. For another example, the material of the binder layer includes polymer glue and a thermally conductive material, the material of the polymer glue includes at least one of the following: epoxy resin, organic silica gel, and polyimide, and the thermally conductive material includes at least one of the following: $Al_2O_3$, ZnO, BeO, AIN, $Si_3N_4$, BN, SiC, $B_4C$, carbon nanotubes, and graphite nanosheets, and the embodiments of the present application are not limited thereto.

It should be understood that the way that the above-mentioned connecting structure 151 has the first flow channel 1511 to form at least part of the first passage 15 and the way that the connecting structure 151 is damaged when the pressure relief mechanism 213 is actuated to form the second space included in the first passage can be used independently or in combination with each other, which is not limited in the embodiments of the present application. For example, as shown in Figs. 8 to 11, the connecting structure 151 is provided with a first flow channel 1511, and at the same time, the connecting structure 151 may also include a melting layer, so that when the pressure relief mechanism 213 is actuated, at least part of the melting layer is melted to form the second space.

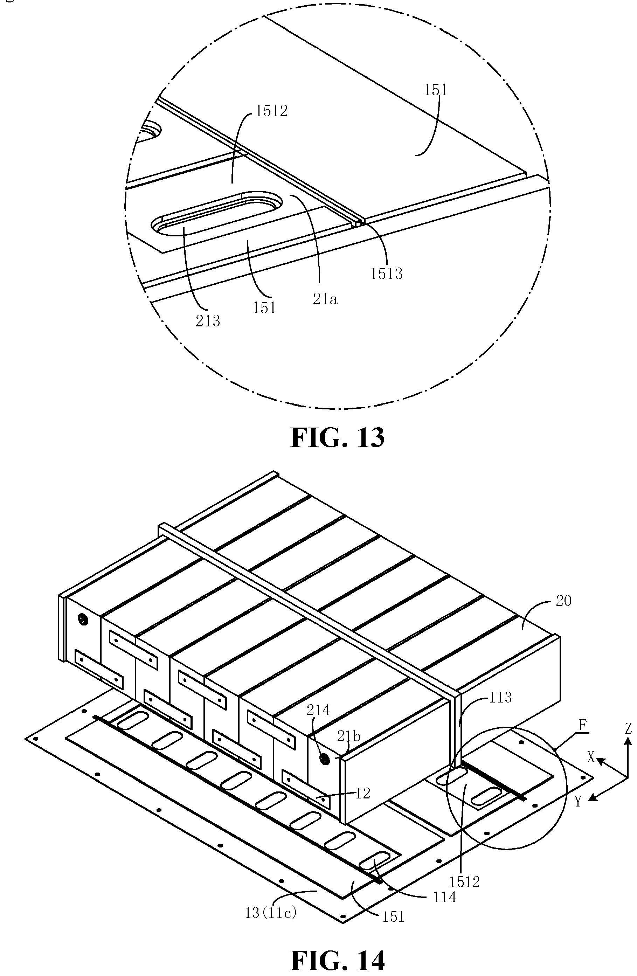

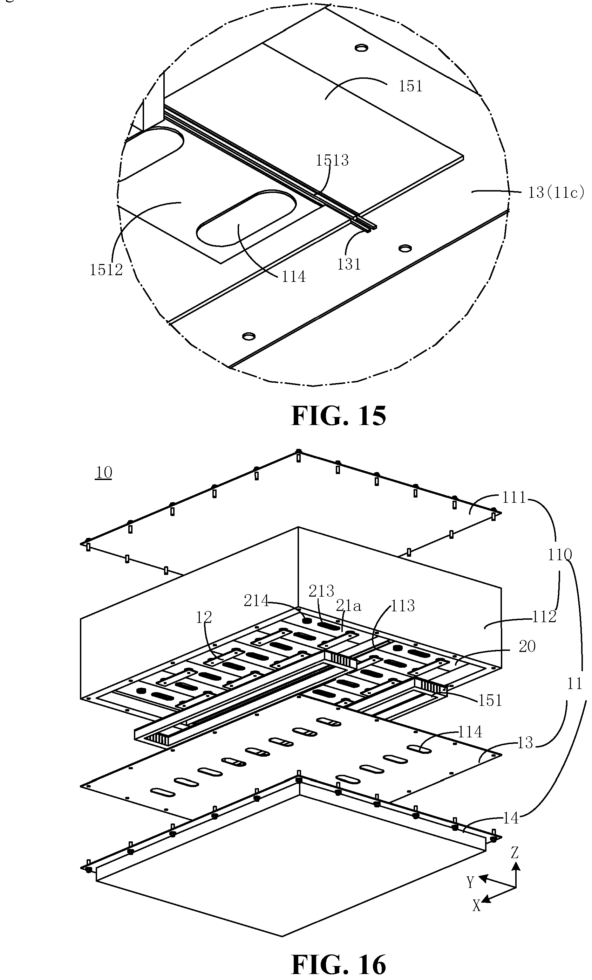

Fig. 12 shows an exploded schematic view of another partial structure of the battery 10 according to the embodiment of the present application, wherein in Fig. 12, the second wall 11c being the isolation component 13 is taken as an example, and Fig. 12 shows that the connecting structure 151 is arranged on the first wall 21a of the battery cell 20. Fig. 13 is an enlarged view of a region E in Fig. 12. Fig. 14 is an exploded schematic view of another partial structure of the battery 10 according to the embodiment of the present application, wherein the battery 10 shown in Fig. 14 is consistent with the battery 10 shown in Fig. 12, both of which take the second wall 11c being the isolation component 13 as an example, but the difference is that Fig. 14 shows the case where the connecting structure 151 is arranged on the isolation component 13. Fig. 15 is an enlarged view of the region F in Fig. 14.

In the embodiments of the present application, as shown in Figs. 12 to 15, the connecting structure 151 is provided with an avoidance region 1512 corresponding to the pressure relief mechanism 213, and the avoidance region 1512 is used to provide a deformation space for the pressure relief mechanism 213 when it is actuated, so as to prevent the connecting structure 151 from covering the pressure relief mechanism 213 and causing delayed actuation of the pressure relief mechanism 213, thereby discharging the emissions quickly through the pressure relief mechanism 213.

It should be understood that the avoidance region 1512 located in the connecting structure 151 can be used to provide a deformation space for the pressure relief mechanism 213, therefore, after the emissions passing through the pressure relief mechanism 213 are discharged from the battery cell 20, the emissions will flow out through the avoidance region 1512, so that the avoidance region 1512 can be regarded as at least part of the first passage 15, and the emissions can be discharged to the electrical cavity 11a through the avoidance region 1512.

As shown in Figs. 12 to 15, the avoidance region 1512 corresponds to at least two pressure relief mechanisms 213. Considering that the plurality of battery cells 20 in the battery 10 are usually arranged in a certain order, the avoidance region 1512 can correspond to a plurality of pressure relief mechanisms 213 at the same time to facilitate processing. For example, the avoidance region 1512 provided on the connecting structure 151 may be an open region, and the open region may correspond to a row of battery cells 20, but the embodiments of the present application are not limited thereto.

It should be understood that, as shown in Figs. 12 to 15, similar to the avoidance region 1512, the second wall 11c in the embodiments of the present application is provided with a pressure relief region 114 corresponding to the pressure relief mechanism 213, and the pressure relief region 114 is used to form at least part of the second passage 16. That is, the emissions can exit the electrical cavity 11a through the pressure relief region 114, for example, the emissions can be discharged into the collection cavity 11b through the pressure relief region 114.

In the embodiments of the present application, as shown in Figs. 12 to 15, the connecting structure 151 further includes: a blocking structure 1513 arranged between the first wall 21a and the second wall 11c and located around the pressure relief mechanism 213. The blocking structure 1513 is used to prevent the emissions discharged through the pressure relief mechanism 213 from reaching the electrode terminals 214 of the battery cell 20. Since the connecting structure 151 can be used to form at least part of the first passage 15, the first passage 15 discharges the emissions passing through the pressure relief mechanism 213 into the electrical cavity 11a, and the electrode terminals 214 are also located in the electrical cavity 11a, if the emissions are discharged to the bus component 12 connecting the electrode terminals 214, it is easy to cause short circuit of different bus components 12, which will cause secondary damage to the battery 10, and even cause the battery 10 to explode. Therefore, the explosion of the battery 10 can be avoided and the safety of the battery 10 can be improved by providing the blocking structure 1513. In addition, when the connecting structure 151 includes a binder, the blocking structure 1513 of the embodiment of the present application can also be used to avoid glue overflow.

It should be understood that the blocking structure 1513 located around the pressure relief mechanism 213 in the embodiments of the present application may include: the blocking structure 1513 is located on at least one side of the pressure relief mechanism 213. For example, as shown in Figs. 12 to 15, the blocking structure 1513 can be located at one side of the pressure relief mechanism 213, and the same blocking structure 1513 can be arranged around the pressure relief mechanisms 213 arranged in the same row along the first direction X to facilitate mounting.

Moreover, as shown in Figs. 12 to 15, the blocking structure 1513 can be used to form the avoidance region 1512. For example, the blocking structure 1513 can be used to form at least one side of the avoidance region 1512, so as to facilitate processing and reduce the difficulty of processing the connecting structure 151.

Specifically, taking Figs. 12 to 15 as an example, the electrode terminal 214 is located on the third wall 21b of the battery cell 20, the third wall 21b intersects with the first wall 21a, and the blocking structure 1513 is arranged on a side of the pressure relief mechanism 213 close to the electrode terminal 214. In this way, when the pressure relief mechanism 213 is actuated, the emissions are blocked by the blocking structure 1513, and there is no or only a very small part of them that can cross the blocking structure 1513 to reach the third wall 21b, thereby reducing the risk of short circuit of the bus components 12 and improving the safety of the battery 10.

Optionally, the material of the blocking structure 1513 in the embodiments of the present application may be set according to actual applications. For example, considering that the emissions discharged when the battery cell 20 is thermally runaway are usually high-temperature and high-pressure emissions, the material of the blocking structure 1513 includes at least one of the following: aluminum, steel, hard plastic, ceramic material and mica so as to ensure that the blocking structure 1513 will not be damaged as far as possible, thereby avoiding affecting the blocking effect of the blocking structure 1513 and avoiding failure of the blocking structure 1513.

In some embodiments, the second wall 11c of the embodiment of the present application further includes a clamping groove 131. For example, when the second wall 11c is the isolation component 13, the surface of the isolation component 13 facing the battery cell 20 can be provided with the clamping groove 131 so as to facilitate mounting and positioning the blocking structure 1513, thereby improving mounting efficiency.

It should be understood that the above drawings mainly take as an example the case where the pressure relief mechanism 213 and the electrode terminal 214 of the battery cell 20 are located on different walls, but the relevant descriptions are also applicable to the case where the pressure relief mechanism 213 and the electrode terminal 214 are located on the same wall. In addition, each of the above drawings mainly takes the connecting structure 151 being a solid structure as an example, but the relevant descriptions are also applicable to a hollow structure, which is not limited in the embodiments of the present application.

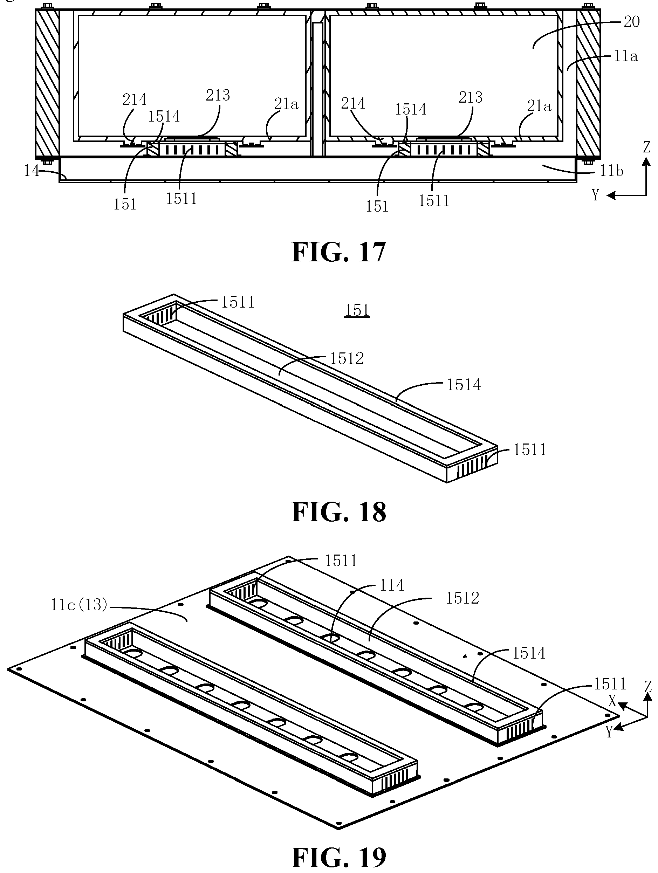

For example, Fig. 16 shows a schematic exploded structural diagram of yet another battery 10 according to the embodiment of the present application. Here, the second wall 11c is still used as the isolation component 13 as an example, and comparing Fig. 16 with the preceding drawings, the difference is that in Fig. 16, the pressure relief mechanism 213 and the electrode terminal 214 are located on the same wall, and correspondingly, the connecting structures 151 are also different. Fig. 17 shows a schematic cross-sectional diagram of the battery 10 shown in Fig. 16, the cross-section is perpendicular to the isolation component 13. Fig. 18 shows a schematic diagram of the connecting structure 151 included in the battery 10 shown in Fig. 16. Fig. 19 shows a schematic diagram of the connecting structure 151 and the isolation component 13 included in the battery 10 shown in Fig. 16.

As shown in Figs. 16 to 19, the battery 10 includes a plurality of battery cells 20 arranged along a first direction X, and the first direction X is also the arrangement direction of a plurality of pressure relief mechanisms 213 included in the plurality of battery cells 20. The battery cell 20 includes an electrode terminal 214 arranged on the first wall 21a, the electrode terminal 214 and the pressure relief mechanism 213 are arranged along a second direction Y, and the first direction X is perpendicular to the second direction Y.

As shown in Fig. 16 to 19, considering that the pressure relief mechanism 213 and the electrode terminal 214 are located on the same wall, in order not to affect the electrode terminal 214, the connecting structure 151 can be arranged between the two electrode terminals 214, so that the connecting structure 151 does not cover the electrode terminal 214.

In addition, similar to the aforementioned connecting structure 151, the connecting structure 151 shown in Figs. 16 to 19 may include a plurality of first flow channels 1511 extending along at least one direction. For example, the connecting structure 151 may include a plurality of first flow channels 1511 extending along a third direction Z. Specifically, the plurality of first flow channels 1511 of the connecting structure 151 may be located on the side wall of the connecting structure 151 perpendicular to the first direction X. For example, the first flow channels 1511 may be slits on the side wall of the connecting structure 151 so as to discharge a small part of the emissions into the electrical cavity 11a, and avoid the influence of the emissions on the bus component 12 as much as possible.

In addition, similar to the aforementioned connecting structure 151, as shown in Figs. 16 to 19, the connecting structure 151 is provided with an avoidance region 1512 for providing a deformation space for the pressure relief mechanism 213. Moreover, the wall of the connecting structure 151 forming the avoidance region 1512 can also be regarded as a blocking structure 1513, which is used to block the emissions discharged from the pressure relief mechanism 213 from flowing to the electrode terminal 214 and the bus component 12.

It should be understood that the material of the connecting structure 151 in the embodiments of the present application may be set according to actual applications. For example, the material of the connecting structure 151 includes at least one of the following: aluminum, steel, hard plastic, ceramic material and mica, so as to ensure the strength of the connecting structure 151, so that when the pressure relief mechanism 213 is actuated, the connecting structure 151 can resist the impact of the emissions to avoid extensive damage, thereby avoiding the influence of the emissions on the bus component 12.

In the embodiments of the present application, since the connecting structure 151 usually uses a material with high connection strength, a compressible foam 1514 can also be provided between the connecting structure 151 and the battery cell 20, which on the one hand can be used to realize the fixing between the connecting structure 151 and the battery cell 20, and on the other hand can also absorb the assembly tolerance between the connecting structure 151 and the battery cell 20.

The above mainly describes the embodiment of realizing at least part of the first passage 15 through the connecting structure 151, and other embodiments of realizing at least part of the first passage 15 will be described below with reference to the drawings.

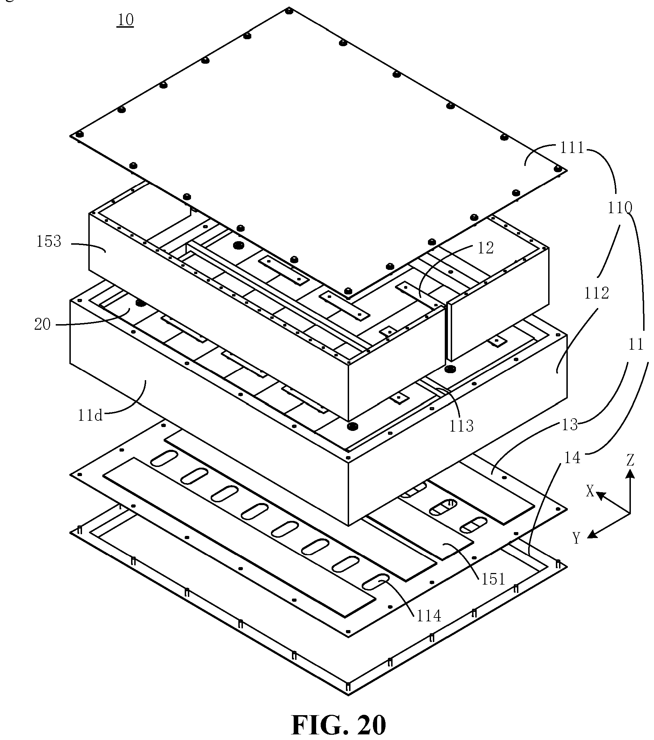

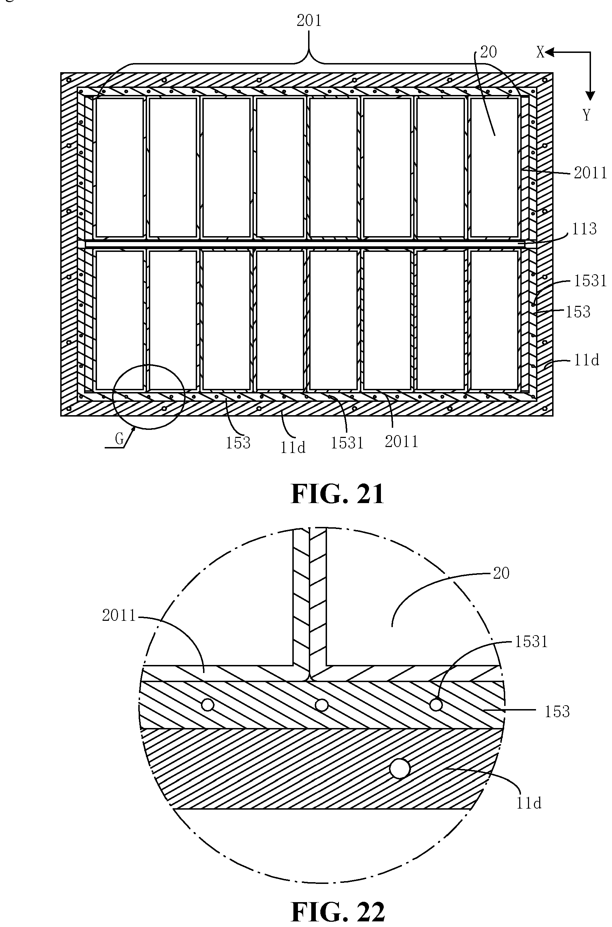

Specifically, Fig. 20 shows a schematic exploded structural diagram of a battery 10 according to yet another embodiment of the present application; Fig. 21 is a schematic cross-sectional diagram of the battery 10 shown in Fig. 20, and the cross-section is perpendicular to the height direction Z of the battery 10; Fig. 22 is an enlarged view of a region G in Fig. 21. As shown in Figs. 20 to 22, in the embodiments of the present application, the battery 10 includes: a battery cell assembly 201, and the battery cell assembly 201 includes a plurality of battery cells 20 arranged along a first direction X.

As shown in Figs. 20 to 22, in the embodiments of the present application, the electrical cavity 11a includes a fourth wall 11d intersecting with the second wall 11c, and the end face 2011 of the battery cell assembly 201 facing the fourth wall 11d and the fourth wall 11d can be configured to form at least part of the first passage 15 therebetween. Specifically, the fourth wall 11d may be any wall of the electrical cavity 11a that intersects with the second wall 11c. For example, if the second wall 11c is the isolation component 13, the fourth wall 11d can be any wall of the second part 112 of the box body 11, or the fourth wall 11d can be the beam 113. At least part of the first passage 15 is formed by the fourth wall 11d and the end face 2011 of the battery cell assembly 201, which, on the basis of at least part of the first passage 15 formed between the second wall 11c and the first wall 21a, further extends the length of the first passage 15 and increases the discharge path of the emissions, so that the emissions can be further cooled down and filtered, and the safety of the battery 10 is improved.

It should be understood that at least part of the first passage 15 can be formed between the fourth wall 11d and the end face 2011 of the battery cell assembly 201 in various ways. For example, a third space is provided between the end face 2011 of the battery cell assembly 201 facing the fourth wall 11d and the fourth wall 11d, and the first passage 15 includes the third space, so that at least part of the first passage 15 is realized through the third space, and there is no need to add additional components, which reduces processing difficulty, and can also reduce the sealing requirements between the end face 2011 and the fourth wall 11d.

For another example, as shown in Fig. 20 to Fig. 22, the battery 10 further includes: a first spacing structure 153 arranged between the end face 2011 and the fourth wall 11d, and the first spacing structure 153 is used to form at least part of the first passage 15. Realizing at least part of the first passage 15 through the first spacing structure 153 can, on the one hand, improve the structural stability between the end face 2011 and the fourth wall 11d, especially when the battery cell 20 does not have thermal runaway, the first spacing structure 153 can be used to realize relative fixing between the end face 2011 and the fourth wall 11d, or can also realize the sealing between the end face wall 2011 and the fourth wall 11d; on the other hand, by reasonably setting the specific shape and position of the first spacing structure 153, the position and direction of the first passage 15 can be adjusted, and then the directional discharge of emissions through the first passage 15 is realized, and the safety of the battery 10 is improved.

It should be understood that the way of realizing at least part of the first passage 15 through the first spacing structure 153 and the way of realizing at least part of the first passage 15 through the third space can be used alone or in combination with each other, and the embodiments of the present application are not limited thereto. For ease of description, the present application mainly describes the first spacing structure 153 in detail with reference to the drawings.

It should be understood that the first spacing structure 153 in the embodiments of the present application can realize at least part of the first passage 15 in various ways. For example, as shown in Figs. 20 to 22, the first spacing structure 153 is provided with a second flow channel 1531, and the first passage 15 includes the second flow channel 1531. The emissions discharged through the pressure relief mechanism 213 can be discharged through the second flow channel 1531. In this way, by setting the position of the second flow channel 1531 reasonably, the directional discharge of the emissions can be realized, and the influence of the emissions on individual components in the electrical cavity 11a can be reduced, for example, the influence on electrode terminals 214 and bus components 12 can be avoided, thereby improving the safety of the battery 10.

Specifically, the second flow channel 1531 in the embodiments of the present application may be a through hole and/or a groove penetrating through the first spacing structure 153, which is not only convenient for processing, but also allows the discharge to pass quickly. For example, as shown in Figs. 20 to 22, the second flow channel 1531 as a through hole passing through the first spacing structure 153 is taken as an example, that is, the first spacing structure 153 can be a porous structure, for example, the first spacing structure 153 can be a honeycomb structure.

It should be understood that the size of the second flow channel 1531 in the embodiments of the present application may be set according to actual applications. For example, the radial dimension of the second flow channel 1531 is less than or equal to 2 mm, wherein the radial direction is perpendicular to the flow direction of the emissions in the second flow channel 1531, so as to prevent the second flow channel 1531 from being too large in size, avoid excessive emissions flowing through the second flow channel 1531 and also prevent the particle size of the emissions flowing through the second flow channel 1531 from being large. The second flow channel 1531 has a filtering effect on the emissions, and can filter large-sized particles, so that the emissions that finally return to the electrical cavity 11a contain smaller high-temperature particles and the gas temperature is lower, thereby reducing the influence of the emissions of the thermally runaway battery cell 20 on other battery cells 20 and avoiding the thermal diffusion in the battery 10 as far as possible, so that there is basically no damage to the components inside the battery 10. Specifically, if the second first flow channel 1531 is a through hole, the radial dimension of the second flow channel 1531 can be the maximum value of the aperture of the second flow channel 1531; if the second flow channel 1531 is a groove, the radial dimension of the second flow channel 1531 may be the maximum value of the depth of the groove or the width of the groove, and the embodiments of the present application are not limited thereto.

In the embodiments of the present application, fillers may be provided in the second flow channel 1531, and the fillers are used to seal the second flow channel 1531 when the pressure relief mechanism 213 is not actuated, and are damaged when the pressure relief mechanism 213 is actuated, so that the second flow channel 1531 is unblocked. In this way, when the thermal runaway of the battery cell 20 does not occur, the sealing performance of the electrical cavity 11a can be improved, so as to prevent the battery cell 20 from being affected or damaged. The material of the filler can be selected according to actual applications. For example, the material of the filler can include styrofoam and/or plastic, but the embodiments of the present application are not limited thereto.

In the embodiments of the present application, the first spacing structure 153 may be provided with a plurality of second flow channels 1531 extending along at least one direction. Specifically, the extension direction of the second flow channel 1531 in the embodiments of the present application may be set according to actual applications. For example, according to the positional relationship between the electrode terminal 214 of the battery cell 20 and the pressure relief mechanism 213, the extension direction of the second flow channel 1531 can be reasonably set to avoid the influence of emissions on the electrode terminal 214 and the bus component 12 connected to the electrode terminal 214. For example, as shown in Figs. 20 to 22, taking the pressure relief mechanism 213 and the electrode terminal 214 being on two opposite walls as an example, the first spacing structure 153 can be provided with a plurality of flow channel 1531 extending along a third direction Z, and the third direction Z is perpendicular to the second wall 11c, so that the emissions pass through the second flow channel 1531 to achieve directional discharge, and the influence on the electrode terminal 214 and the bus component 12 connected to the electrode terminal 214 can also be avoided.

Optionally, the material of the first spacing structure 153 in the embodiments of the present application may be set according to actual applications. For example, considering that the first spacing structure 153 has the functions of filtering, absorbing heat and cooling and partially intercepting the emissions, in order to avoid the failure of the first spacing structure 153 and prevent the extensive damage of the first spacing structure 153 by the emissions, the material of the first spacing structure 153 may include at least one of the following: metal, ceramic, silicone rubber and plastic.

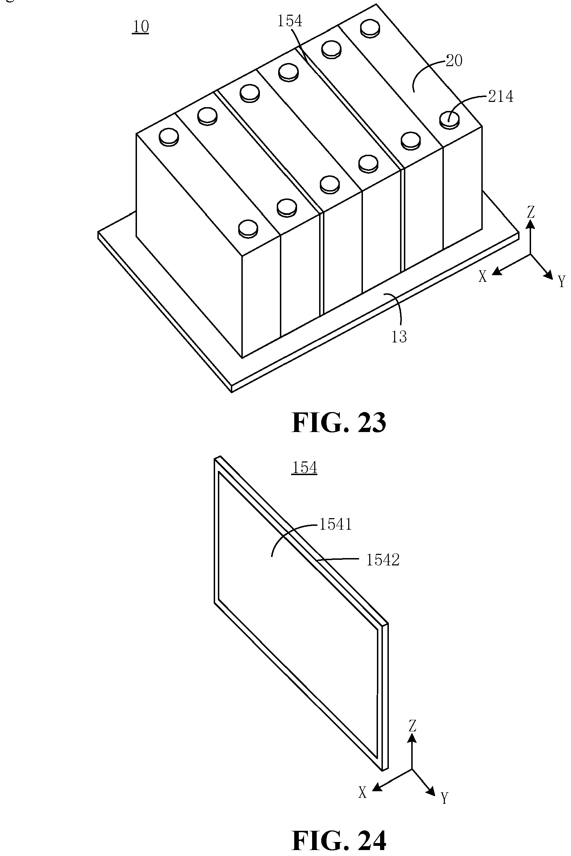

It should be understood that in the embodiments of the present application, at least part of the first passage 15 may also be implemented in other ways. Fig. 23 shows a schematic partial structural diagram of a battery 10 according to yet another embodiment of the present application. As shown in Fig. 23, the battery 10 further comprises: a second spacing structure 154 arranged between two adjacent battery cells 20; the second spacing structure 154 is used to form at least part of the first passage 15. The second spacing structure 154 arranged between two adjacent battery cells 20 in the battery 10 can be used to absorb the expansion and deformation of the battery cells 20 when the battery cells 20 are in normal use; when the isolation component 13 under the battery cells 20 is a thermal management component, the second spacing structure can also be used to block the moisture generated by the thermal management component; when the battery cells 20 undergo thermal runaway, on the one hand, the second spacing structure can block the heat transferred between the battery cells 20; on the other hand, the second spacing structure 154 can be used to form at least part of the first passage 15, the second spacing structure 154 can thus allow a small amount of emissions to discharge into the electrical cavity 11a, which increases the discharge path of the emissions, and improves the discharge efficiency of the emissions.

It should be understood that the second spacing structure 154 in the embodiments of the present application can form at least part of the first passage 15 in various ways. For example, the second spacing structure 154 is configured to be damaged when the pressure relief mechanism 213 is actuated, so that a fourth space is formed between the two battery cells 20, and the first passage 15 includes the fourth space. In this way, by reasonably selecting the material of the second spacing structure 154, the second spacing structure 154 can be damaged when the pressure relief mechanism 213 is actuated, thereby forming a fourth space without additional processing of the second spacing structure 154, which is more convenient and can also ensure the sealing performance and stability of the battery cell 20 during normal use.

Specifically, in the embodiments of the present application, the second spacing structure 154 being damaged may include: at least part of the second spacing structure 154 is damaged. For example, when the pressure relief mechanism 213 is actuated, only the outside of the second spacing structure 154 may be damaged, and part of the internal components of the second spacing structure 154 are exposed and not damaged; or, the internal structure of the second spacing structure 154 is damaged, for example, the second spacing structure 154 may be a multi-layer structure, and some structural layers in the multi-layer structure are damaged; or, the second spacing structure 154 may be completely damaged, which is not limited in the embodiments of the present application.

It should be understood that the second spacing structure 154 of the embodiment of the present application can be damaged when the pressure relief mechanism 213 is actuated, which can be achieved in various ways. For example, the second spacing structure 154 may include a region of low structural strength, so that when the pressure relief mechanism 213 is actuated, the second spacing structure 154 is damaged by the impact force of the emissions on the second spacing structure 154.

For another example, the second spacing structure 154 is a multi-layer structure, and the multi-layer structure includes a melting layer configured to be melted when the pressure relief mechanism 213 is actuated, so that a fourth space is formed between the two battery cells 20. Since the emissions discharged through the pressure relief mechanism 213 are high-temperature emissions, the arrangement of the melting layer makes the battery cell 20 not easily damaged during normal use, which can ensure the safety and stability of the battery 10.

It should be understood that the melting layer can be located in any layer of the second spacing structure 154. For example, the melting layer can be the outermost layer of the second spacing structure 154, so that the melting layer can be in direct contact with the battery cells 20 and melt in time.

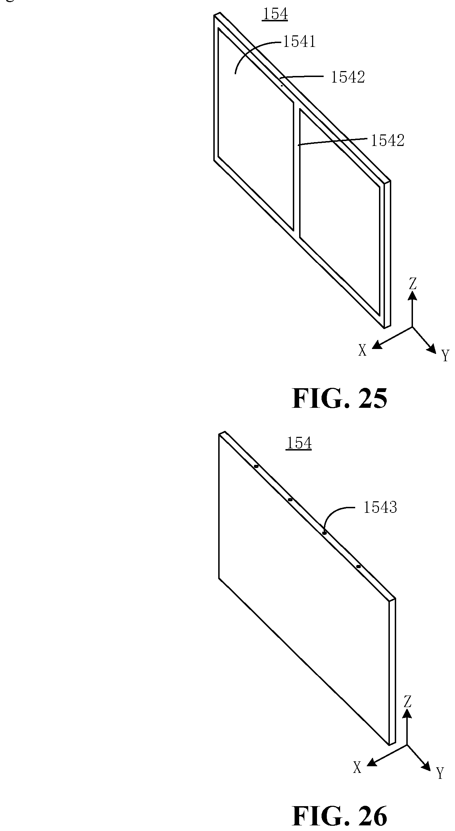

Fig. 24 and Fig. 25 respectively show two possible schematic diagrams of the second spacing structure 154 according to the embodiments of the present application. As shown in Fig. 24 and Fig. 25 , in some embodiments, the second spacing structure 154 may also include a first region 1541 and a second region 1542, the melting point of the first region 1541 is higher than the melting point of the second region 1542, and the second region 1542 is configured to be melted when the pressure relief mechanism 213 is actuated, so that a fourth space is formed between the two battery cells 20. In this way, the second spacing structure 154 includes a first region 1541 resistant to high temperature and a second region 1542 not resistant to high temperature, and when the pressure relief mechanism 213 is actuated, the emissions can melt the second region 1542 to form the first passage 15; at the same time, the first region 1541 of the second spacing structure 154 may not be substantially damaged, so as to ensure that the heat transfer between the battery cells 20 can be blocked and thermal diffusion can be avoided.

It should be understood that the positions and distribution of the first region 1541 and the second region 1542 in the embodiments of the present application may be set according to actual applications. For example, as shown in Figs. 24 and 25, the first region 1541 may be a central region to facilitate heat insulation; and the second region 1542 is generally an edge region so as to have little effect on heat insulation after the second region 1542 is damaged; or, as shown in Fig. 25, the second region 1542 may also include a part of the middle region, so as to increase the distribution area of the second region 1542, thereby increasing the discharge speed of the emissions.

In some embodiments, the area of the first region 1541 is greater than the area of the second region 1542 to ensure that the area of the first region 1541 for heat blocking accounts for more than 50% to avoid thermal diffusion.

In some embodiments, the materials of the first region 1541 and the second region 1542 can be set according to actual applications. For example, the material of the second region 1542 includes rubber and/or plastic, so as to prevent the second region 1542 from being damaged by high-temperature emissions.

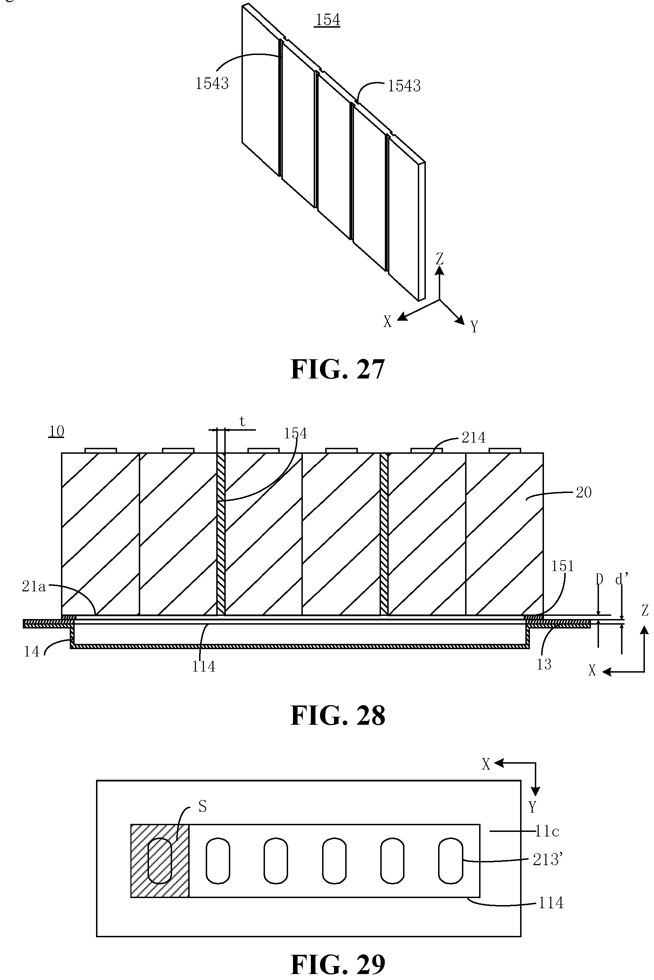

Fig. 26 and Fig. 27 respectively show another two possible implementations of the second spacing structure 154 according to the embodiments of the present application. As shown in Figs. 26 and 27, the second spacing structure 154 is provided with a third flow channel 1543, and the first passage 15 includes the third flow channel 1543. The emissions discharged through the pressure relief mechanism 213 can be discharged into the electrical cavity 11a through the third flow channel 1543. In this way, by setting the position of the third flow channel 1543 reasonably, the directional discharge of the emissions can be realized, the influence of the emissions on individual components in the electrical cavity 11a can be reduced, and the thermal diffusion between the battery cells 20 can be avoided, thereby improving the safety of the battery 10.

In the embodiments of the present application, the second spacing structure 154 may be provided with a plurality of third flow channels 1543 extending along at least one direction. Specifically, the extension direction of the third flow channel 1543 in the embodiments of the present application may be set according to actual applications. For example, as shown in Figs. 26 to 27, the second spacing structure 154 can be provided with a plurality of third flow channels 1543 extending along a third direction Z, the third direction Z is perpendicular to the arrangement direction of the two battery cells 20 clamping the second spacing structure 154, and the third direction Z is also perpendicular to the second wall 11c of the electrical cavity 11a, so that the emissions pass through the third flow channel 1543, realizing directional discharge, and avoiding the influence of high-temperature emissions on the two adjacent battery cells 20.

In the embodiments of the present application, the plurality of third flow channels 1543 may include: through holes penetrating through the second spacing structure 154; and/or, grooves arranged on the surface of the second spacing structure facing at least one battery cell 20 of the two battery cells 20 to facilitate processing. For example, as shown in Fig. 26, the plurality of third flow channels 1543 may include a plurality of through holes distributed parallel to each other, and each through hole penetrates through the second spacing structure 154 along the third direction Z. For another example, as shown in Fig. 27, the plurality of third flow channels 1543 may include a plurality of grooves, and the plurality of grooves may include: grooves with openings facing at least one battery cell 20 of the two battery cells 20 clamping the second spacing structure 154. For example, in Fig. 27, taken as an example, the plurality of third flow channels 1543 include grooves with openings facing opposite sides, and in Fig. 27, the plurality of third runners 1543 are parallel to each other and evenly distributed, which is convenient for processing and makes the emissions passing through the third flow channel 1543 relatively dispersed to avoid the problem of excessive emissions in a local area caused by the accumulation of the emissions, so as to ensure the safety of the battery cells 20 and the battery 10.

In the embodiments of the present application, fillers may be provided in the third flow channel 1543, and the fillers are used to seal the third flow channel 1543 when the pressure relief mechanism 213 is not actuated, and are damaged when the pressure relief mechanism 213 is actuated, so that the third flow channel 1543 is unblocked. In this way, it can be used to block the heat transfer between the battery cells 20 when the battery cells 20 do not have thermal runaway. The material of the filler can be selected according to actual applications. For example, the material of the filler can include styrofoam and/or plastic, but the embodiments of the present application are not limited thereto.

It should be understood that the first passage 15 in the embodiments of the present application can discharge the emissions discharged through the pressure relief mechanism 213 to the electrical cavity 11a; further, a first balance valve can be provided on the wall of the box body 11 of the battery 10, the first balance valve is used to discharge the emissions passing through the first passage 15 out of the box body 11, so as to avoid thermal diffusion caused by the accumulation of the emissions in the box body 11 and improve the safety of the battery 10. Specifically, the first balance valve can be arranged on the wall for forming the electrical cavity 11a, so as to discharge the emissions out of the electrical cavity 11a in time.

Similarly, the second passage 16 can discharge the emissions discharged through the pressure relief mechanism 213 out of the electrical cavity 11a. For example, the emissions can be discharged to the collection cavity 11b, but the space of the collection cavity 11b is limited, so a second balance valve may be provided on the wall of the box body 11. The second balance valve is used to discharge the emissions discharged through the second passage 16 out of the box body 11. For example, the emissions may be discharged out of the battery 10 from the collection cavity 11b, so as to avoid thermal diffusion or explosion caused by accumulation of the emissions in the collection cavity 11b of the box body 11 and improve the safety of the battery 10. Specifically, the second balance valve can be arranged on the wall for forming the collection cavity 11b, so as to discharge the emissions out of the collection cavity 11b in time.

When thermal runaway or other abnormal conditions occur in the battery cell 20, the high-temperature and high-pressure emissions generated inside the battery cell are discharged toward the direction where the battery cell 20 is equipped with the pressure relief mechanism 213. Such emissions are usually very powerful and destructive, and if only one passage is provided, the emissions are likely to break the structure of the passage or one or more structures around the passage, causing further safety issues. Therefore, in the battery 10 of the embodiments of the present application, the emissions discharged from the pressure relief mechanism 213 can be discharged into the electrical cavity 11a by setting the first passage 15, and the emissions discharged from the pressure relief mechanism 213 can be discharged out the electrical cavity 11a by setting the second passage 16. The emissions discharged through the pressure relief mechanism 213 can be discharged through two passages simultaneously, which can speed up the discharge and reduce the explosion risk of the battery 10.

It should be understood that the battery 10 of the embodiments of the present application has been described in detail above mainly from a structural point of view, and the related dimensional design of the battery 10 of the embodiments of the present application will be described below with reference to the drawings. For ease of description, Fig. 28 shows a schematic partial cross-sectional diagram of the battery 10 according to the embodiment of the present application. The cross section is perpendicular to the isolation component 13 of the battery 10, for example, the cross section is perpendicular to the second direction Y. In Fig. 28, as an example, the isolation component 13 is used as the second wall 11c, and also as an example, the pressure relief mechanism 213 and the electrode terminal 214 of the battery cell 20 are located on two opposite walls, but the relevant descriptions are also applicable to other situations, which for the sake of brevity, will not be repeated here. Fig. 29 shows a schematic diagram of the surface of the second wall 11c facing the battery cell 20 according to an embodiment of the present application, wherein the second wall 11c can be any wall of the electrical cavity 11a.

As shown in Figs. 28 and 29, the second wall 11c of the embodiment of the present application is provided with a pressure relief region 114 corresponding to the pressure relief mechanism 213, and the pressure relief region 114 is used to form at least part of the second passage 16, that is, the pressure relief region 114 may be used to discharge emissions out of the electrical cavity 11a, for example, may discharge emissions to the collection cavity 11b. For example, Fig. 28 takes the second wall 11c being the isolation component 13 as an example, and the isolation component 13 includes the pressure relief region 114.

It should be understood that each pressure relief region 114 provided on the second wall 11c may correspond to one or more pressure relief mechanisms 213. For example, the second wall 11c is provided with a plurality of pressure relief regions 114, and the plurality of pressure relief regions 114 correspond to the pressure relief mechanisms 213 of the plurality of battery cells 20 one by one. For another example, the second wall 11 c is provided with one or more pressure relief regions 114, and each pressure relief region 114 corresponds to a plurality of pressure relief structures 213. Taking Fig. 29 as an example, Fig. 29 only shows one pressure relief region 114, and the pressure relief region 114 includes 6 areas 213', and the area 213' represents the orthographic projection of the pressure relief mechanism 213 of the battery cell 20 on the surface of the second wall 11c. Therefore, the pressure relief region 114 shown in Fig. 29 corresponds to 6 pressure relief mechanisms 213, but the embodiments of the present application are not limited thereto.

In some embodiments, the pressure relief region 114 is a through hole penetrating through the second wall 11c in a direction perpendicular to the first wall 21a. For example, Fig. 28 takes the pressure relief region 114 being a through hole penetrating through the second wall 11c as an example, and the penetration direction is perpendicular to the first wall 21a, that is, the penetration direction is the third direction Z. When the pressure relief region 114 is a through hole, on the one hand, it is convenient for processing, and on the other hand, the emissions discharged through the pressure relief mechanism 213 can be quickly released.

When the pressure relief region 114 is a through hole, the pressure relief region 114 satisfies the following formula (1):

$$5 \times 10^{-5}\,\mathrm{mm}^{-1} \leq \frac{D}{S} \leq 0.6\,\mathrm{mm}^{-1} \qquad (1)$$

wherein S is the area of the orthographic projection of the pressure relief region 114 on the second wall 11c divided by the number of pressure relief mechanisms 213 corresponding to the pressure relief region 114, and D is the distance between the second wall 11c and the first wall 21a. Specifically, as shown in Figs. 28 and 29, the parameter S in the embodiments of the present application may represent the total area of the orthographic projection of the pressure relief region 114 on the second wall 11c divided by the number of pressure relief mechanism 213 corresponding to the pressure relief region 114 (for example, the number is 6 in Fig. 29). For example, S may roughly correspond to the area of the shaded part shown in Fig. 29. D represents the distance between the second wall 11c and the first wall 21a. For example, taking only the connecting structure 151 being provided between the first wall 21a and the second wall 11c in Fig. 28 as an example, D may represent the thickness of the connecting structure 151; or, if a first space 152 is further provided between the first wall 21a and the second wall 11c, then D represents the sum of the thickness of the connecting structure 151 and the thickness of the first space 152. In addition, in the embodiments of the present application, taken as an example, the first wall 21a and the second wall 11c are parallel to each other. On the contrary, if the first wall 21a is not parallel to the second wall 11c, the parameter D can represent the average value of the distance between the first wall 21a and the second wall 11c, or represent the average, maximum or minimum value of the distance between the first wall 21a and the second wall 11c in the area around the pressure relief mechanism 213, and the embodiments of the present application are not limited thereto.

It should be understood that if D/S is too large, for example, exceeds the limit of formula (1), the parameter D may be at the maximum value, and the parameter S may be at the minimum value. In this case, the first passage 15 to the electrical cavity 11a is large and the second passage 16 through which the emissions are discharged from the electrical cavity 11a is relatively small. As a result, the emissions discharged from the thermal runaway are very easy to return to the electrical cavity 11a, that is, more emissions enter the electrical cavity 11a, while less emissions exit the electrical cavity 11a, which is not conducive to collection of emissions by the collecting cavity 11b, but may affect the safety of the electrical cavity 11a, for example, easily lead to the short circuit of the bus components 12. Therefore, in order to ensure that most of the emissions are discharged from the electrical cavity 11a, for example, can enter the collection cavity 11b, the parameter D/S should not be set too large.

On the contrary, if D/S is too small, for example, exceeds the limit of formula (1), the parameter D may be at the minimum value, while S is at the maximum value. In this case, the first passage 15 to the electrical cavity 11a is small, and it is difficult for the emissions of thermal runaway to return to the electrical cavity 11, and the first passage 15 is difficult to function, so the pressure relief region 114 corresponding to the parameter S may not be able to ensure the frame structure strength of the battery 10 and at the same time ensure discharging a large amount of emissions from the electrical cavity 11a. Therefore, D/S should not be too small either.

Similarly, still when the pressure relief region 114 is a through hole, if the second spacing structure 154 is arranged between two adjacent battery cells 20 in the battery, the second spacing structure 154 is used to form at least part of the first passage 15, and the pressure relief region 114 satisfies the following formula (2):

$$5 \times 10^{-5}\,\text{mm}^{-1} \le \frac{t}{S} \le 1.2\,\text{mm}^{-1} \qquad (2)$$

wherein S is the area of the orthographic projection of the pressure relief region 114 on the second wall 11c divided by the number of pressure relief mechanisms 213 corresponding to the pressure relief region 114, and t is the distance between the two battery cells 20. Specifically, the parameter S has the same meaning as in formula (1); and the parameter t represents the distance between two battery cells 20. For example, as shown in Fig. 28, if only the second spacing structure 154 is provided between two battery cells 20, t is also equal to the thickness of the second spacing structure 154. In addition, in the embodiments of the present application, taken as an example, the surfaces of the two battery cells 20 holding the second spacing structure 154 are parallel to each other. On the contrary, if the surfaces of the two battery cells 20 are not parallel, or in other words, the thickness of the second spacing structure 154 is uneven, the parameter t may represent the average distance between two battery cells 20, or the average thickness of the second spacing structure 154.

It should be understood that if the parameter t/S is too large, for example, exceeds the limit of formula (2), the parameter t may be at the maximum value, and the parameter S is at the minimum value. In this case, the first passage 15 to the electrical cavity 11a is large and the second passage 16 through which the emissions are discharged from the electrical cavity 11a is relatively small. As a result, the emissions discharged from the thermal runaway are very easy to return to the electrical cavity 11a, that is, more emissions enter the electrical cavity 11a, while less emissions exit the electrical cavity 11a, which is not conducive to collection of emissions by the collecting cavity 11b, but may affect the safety of the electrical cavity 11a, for example, easily lead to the short circuit of the bus components 12. Therefore, in order to ensure that most of the emissions are discharged from the electrical cavity 11a, for example, can enter the collection cavity 11b, the parameter t/S should not be set too large.

On the contrary, if t/S is too small, for example, exceeds the limit of formula (2), the parameter t may be at the minimum value, while S is at the maximum value. In this case, the first passage 15 to the electrical cavity 11a is small, and it is difficult for the emissions of thermal runaway to return to the electrical cavity 11, and the first passage 15 is difficult to function, so the pressure relief region 114 corresponding to the parameter S may not be able to ensure the frame structure strength of the battery 10 and at the same time ensure discharging a large amount of emissions from the electrical cavity 11a. Therefore, t/S should not be too small either.

In the embodiments of the present application, the pressure relief region 114 may not be set as a through hole. For example, the pressure relief region 114 is a weak region of the second wall 11c, and the weak region is damaged when the pressure relief mechanism 213 is actuated to form at least part of the second passage 16. Specifically, upon actuation of the pressure relief mechanism 213, the weak region can be damaged so that the emissions from a battery cell 20 provided with the pressure relief mechanism 213 pass through the weak region and exit the electrical cavity 11a, for example, may pass through the weak region and enter the collection cavity 11b. Setting the pressure relief region 114 as a weak region can make the second wall 11c in a sealed state when the pressure relief mechanism 213 is not actuated, for example, during normal use of the battery 10, effectively protecting the pressure relief mechanism 213 from being damaged by external force and failing.

It should be understood that when the pressure relief region 114 is a weak region, the weak region may adopt various settings to facilitate damage by the emissions, which is not limited in the embodiments of the present application, and will be described with examples below. For example, the pressure relief region 114 may be a region with a smaller thickness on the second wall 11c, so that the strength of the pressure relief region 114 is weaker, thereby forming a weak region. In addition to using a weak region with a smaller thickness, a material with a low melting point can also be used to form a weak region so as to facilitate melting by the emissions. That is, the weak region may have a lower melting point than the rest of the second wall 11c. For example, the material used in the weak region has a melting point below 400°C.

It should be understood that when the pressure relief region 114 is a weak region, the weak region can adopt settings of both materials with a low melting point and smaller thickness at the same time. That is to say, the above two implementations can be implemented alone or in combination, and the embodiments of the present application are not limited thereto.

When the pressure relief region 114 is a weak region, the pressure relief region 114 satisfies the following formula (3):

$$0.05 \leq \frac{D}{d} \leq 30 \qquad (3)$$

wherein d is the minimum value of the thicknesses at different positions in the weak region; and D is the distance between the second wall 11c and the first wall 21a. Specifically, the parameter D has the same meaning as in the above formula (1). The parameter d represents the minimum value of the thickness in the pressure relief region 114. When the pressure relief region 114 is a weak region, there can be various arrangements for the weak region, so that the thickness of the weak region may be less than or equal to that of the second wall 11c. For example, as shown in Fig. 28, if the thickness of the second wall 11c where the pressure relief region 114 is located is d', the minimum value of the thicknesses at different positions in the weak region indicated by the parameter d is less than or equal to the thickness d'.

It should be understood that when the parameter D increases, the first passage 15 to the electrical cavity 11a increases, and the emissions discharged from thermal runaway are very easy to return to the electrical cavity 11a, so the corresponding parameter d should be designed to decrease, thereby reducing the difficulty of the emissions breaking through the pressure relief region 114, that is, reducing the difficulty of discharging the emissions from the electrical cavity 11a, so that the emissions can be more easily discharged from the electrical cavity 11a. Therefore, when the parameter d cannot be too small in order to meet the discharge requirements of emissions and be compatible with the structural strength requirements of the battery 10, the parameter D should not be set too large, that is, D/d should not be set too large.

On the contrary, when D is at the minimum value, the first passage 15 to the electrical cavity 11a is small, and it is difficult for the emissions of thermal runaway to return to the electrical cavity 11a, and the first passage 15 is difficult to function, so a large amount of emissions need to exit through the pressure relief region 114 of the second wall 11c. The value of parameter d should ensure that the second wall 11c can be smoothly and quickly broken through by the discharged emissions, so the value of d should also not be too large, that is, the value of D/d should not be too small.

Similarly, still when the pressure relief region 114 is a weak region, if the second spacing structure 154 is arranged between two adjacent battery cells 20 in the battery, the second spacing structure 154 is used to form at least part of the first passage 15, and the pressure relief region 114 satisfies the following formula (4):

$$0.05 \leq \frac{t}{d} \leq 60 \qquad (4)$$

wherein d is the minimum value of the thicknesses at different positions in the weak region; and t is the distance between the two battery cells 20. Specifically, the parameter d has the same meaning as that in the above formula (3); the parameter t has the same meaning as that in the above formula (2).

It should be understood that when the parameter t increases, the first passage 15 to the electrical cavity 11a increases, and the emissions discharged from thermal runaway are very easy to return to the electrical cavity 11a, so the corresponding parameter d should be designed to decrease, thereby reducing the difficulty of the emissions breaking through the pressure relief region 114, that is, reducing the difficulty of discharging the emissions from the electrical cavity 11a, so that the emissions can be more easily discharged from the electrical cavity 11a. Therefore, when the parameter d cannot be too small in order to meet the discharge requirements of emissions and be compatible with the structural strength requirements of the battery 10, the parameter t should not be set too large, that is, t/d should not be set too large.

On the contrary, when t is at the minimum value, the first passage 15 to the electrical cavity 11a is small, and it is difficult for the emissions of thermal runaway to return to the electrical cavity 11a, and the first passage 15 is difficult to function, so a large amount of emissions need to exit through the pressure relief region 114 of the second wall 11c. The value of parameter d should ensure that the second wall 11c can be smoothly and quickly broken through by the discharged emissions, so the value of d should also not be too large, that is, the value of t/d should not be too small.

Therefore, for the battery 10 of the embodiments of the present application, the dimensional relationship between the first passage 15 and the second passage 16 can be adjusted by rationalizing the above parameters, and then the proportion of the emissions entering the electrical cavity 11a can be adjusted, so that a lesser portion of the emissions discharged through the pressure relief mechanism 213 enters the electrical cavity 11a, while the majority of the emissions can exit the electrical cavity 11a. In this way, the discharge pressure of the emissions from the electrical cavity 11a can be relieved, the requirements on the sealing performance of the electrical cavity 11a and on the second passage 16 can be reduced, and the safety of the electrical cavity 11a can be ensured as much as possible. This prevents a large amount of emissions from entering the electrical cavity 11a to affect the bus component 12 and so on and result in short circuit or even explosion, thereby improving the safety of the battery 10.

Although the present application has been described with reference to the preferred embodiments, various improvements can be made thereto and components thereof can be replaced with equivalents without departing from the scope of the present application. In particular, the technical features mentioned in the various embodiments can be combined in any manner as long as there is no structural conflict. The present application is not limited to the specific embodiments disclosed herein, but rather includes all technical solutions falling within the scope of the claims.

**Claims**

1.  A battery, comprising:

    a box body (11), including an electrical cavity (11a);
    a battery cell (20), accommodated in the electrical cavity (11a), a first wall (21a) of the battery cell (20) being provided with a pressure relief mechanism (213); and
    a first passage (15) and a second passage (16), the first passage (15) and the second passage (16) being configured to be able to communicate with the inside of the battery cell (20) through the pressure relief mechanism (213) when the pressure relief mechanism (213) is actuated;
    wherein the first passage (15) is used to discharge the emissions discharged from the pressure relief mechanism (213) into the electrical cavity (11a), and the second passage (16) is used to discharge the emissions discharged from the pressure relief mechanism (213) out of the electrical cavity (11a);
    wherein the electrical cavity (11a) comprises a second wall (11c), and the first wall (21a) faces the second wall (11c); and
    wherein the battery further comprises: a connecting structure (151), the connecting structure (151) being arranged between the first wall (21a) and the second wall (11c), and the connecting structure (151) being used to form at least part of the first passage (15);
    wherein the connecting structure (151) is provided with an avoidance region (1512) corresponding to the pressure relief mechanism (213), and the avoidance region (1512) is used to provide a deformation space for the pressure relief mechanism (213) upon actuation, and
    wherein the avoidance region (1512) corresponds to at least two pressure relief mechanisms (213).

2.  The battery according to claim 1, wherein a first space (152) is provided between the second wall (11c) and the first wall (21a), and the first passage (15) includes the first space (152).

3.  The battery according to any one of claims 1 or 2, wherein the connecting structure (151) is provided with a first flow channel (1511), and the first passage (15) includes the first flow channel (1511).

4.  The battery according to any one of claims 1 to 3, wherein the connecting structure (151) is configured to be damaged when the pressure relief mechanism (213) is actuated, so that a second space is formed between the first wall (21a) and the second wall (11c), and the first passage (15) includes the second space; and,

    wherein preferably, the connecting structure (151) comprises a melting layer arranged between the first wall (21a) and the second wall (11c), the melting layer is configured to be melted when the pressure relief mechanism (213) is actuated, so that the second space is formed between the first wall (21a) and the second wall (11c); and,
    wherein more preferably, the thickness of the melting layer is 0.5 mm to 3 mm.

5.  The battery according to any one of claims 1 to 4, wherein the connecting structure (151) further comprises:

    a blocking structure (1513), arranged between the first wall (21a) and the second wall (11c) and around the pressure relief mechanism (213), the blocking structure (1513) being used to block the emissions discharged through the pressure relief mechanism (213) from reaching the electrode terminal (214) of the battery cell (20), and preferably,
    wherein the electrode terminal (214) is located on a third wall (21b) of the battery cell (20), the third wall (21b) intersects with the first wall (21a), and the blocking structure (1513) is arranged on a side of the pressure relief mechanism (213) close to the electrode terminal (214).

6. The battery according to any one of claims 1 to 5, wherein the connecting structure (151) includes a thermal pad and/or a sealing pad arranged between the first wall (21a) and the second wall (11c).

7. The battery according to any one of claims 1 to 6, wherein the battery comprises:

a battery cell assembly (201); the battery cell assembly (201) includes a plurality of battery cells (20) arranged along a first direction, the electric cavity (11a) includes a fourth wall (11d) intersecting with the second wall (11c), a third space is provided between an end face (2011) of the battery cell assembly (201) facing the fourth wall (11d) and the fourth wall (11d), and the first passage (15) includes the third space, and preferably, wherein the battery further comprises:

a first spacing structure (153), arranged between the end face (2011) and the fourth wall (11d), the first spacing structure (153) being used to form at least part of the first passage (15), more preferably, wherein the first spacing structure (153) is provided with a second flow channel (1531), and the first passage (15) includes the second flow channel (1531).

8. The battery according to any one of claims 1 to 7, wherein the battery further comprises:

a second spacing structure (154), arranged between two adjacent battery cells (20), the second spacing structure (154) being used to form at least part of the first passage (15), and preferably, wherein the second spacing structure (154) is configured to be damaged when the pressure relief mechanism (213) is actuated, so that a fourth space is formed between the two battery cells (20), and the first passage (15) includes the fourth space.

9. The battery according to claim 8, wherein the second spacing structure (154) is provided with a third flow channel (1543), and the first passage (15) includes the third flow channel (1543).

10. The battery according to any one of claims 1 to 9, wherein the second wall (11c) is provided with a pressure relief region (114) corresponding to the pressure relief mechanism (213), and the pressure relief region (114) is used to form at least part of the second passage (16), and preferably, wherein the pressure relief region (114) is a through hole penetrating through the second wall (11c) in a direction perpendicular to the first wall (21a).

11. The battery according to any one of claims 1 to 10, wherein the box body (11) further comprises:

a collection cavity (11b), used for collecting the emissions discharged through the second passage (16) when the pressure relief mechanism (213) is actuated; and wherein preferably, the battery further comprises: an isolation component, configured to isolate the electrical cavity (11a) and the collection cavity (11b).

12. An electrical device, comprising: the battery according to any one of claims 1 to 11, wherein the battery is configured to provide electric energy for the electrical device.


**Patentansprüche**

1. Batterie, umfassend:

einen Kastenkörper (11), der einen elektrischen Hohlraum (11a) umfasst; eine Batteriezelle (20), die in dem elektrischen Hohlraum (11a) aufgenommen ist, wobei eine erste Wand (21a) der Batteriezelle (20) mit einem Druckentlastungsmechanismus (213) versehen ist; und einen ersten Durchgang (15) und einen zweiten Durchgang (16), wobei der erste Durchgang (15) und der zweite Durchgang (16) so ausgelegt sind, dass sie bei Betätigung des Druckentlastungsmechanismus (213) über den Druckentlastungsmechanismus (213) mit dem Inneren der Batteriezelle (20) in Verbindung stehen können; wobei der erste Durchgang (15) dazu verwendet wird, die aus dem Druckentlastungsmechanismus (213) abgegebenen Emissionen in den elektrischen Hohlraum (11a) abzuführen, und der zweite Durchgang (16) dazu verwendet wird, die aus dem Druckentlastungsmechanismus (213) abgegebenen Emissionen aus dem elektrischen Hohlraum (11a) abzuführen;

wobei der elektrische Hohlraum (11a) eine zweite Wand (11c) umfasst und die erste Wand (21a) der zweiten Wand (11c) gegenüberliegt; und

wobei die Batterie ferner umfasst: eine Verbindungsstruktur (151), wobei die Verbindungsstruktur (151) zwischen der ersten Wand (21a) und der zweiten Wand (11c) angeordnet ist und die Verbindungsstruktur (151) dazu verwendet wird, zumindest einen Teil des ersten Durchgangs (15) zu bilden;

wobei die Verbindungsstruktur (151) mit einem Freihaltebereich (1512) versehen ist, der dem Druckentlastungsmechanismus (213) entspricht, und der Freihaltebereich (1512) dazu verwendet wird, bei Betätigung einen Deformierungsraum für den Druckentlastungsmechanismus (213) zu versehen, und

wobei der Freihaltebereich (1512) mindestens zwei Druckentlastungsmechanismen (213) entspricht.

2. Batterie nach Anspruch 1, wobei zwischen der zweiten Wand (11c) und der ersten Wand (21a) ein erster Raum (152) vorgesehen ist und der erste Durchgang (15) den ersten Raum (152) umfasst.

3. Batterie nach einem der Ansprüche 1 oder 2, wobei die Verbindungsstruktur (151) mit einem ersten Strömungskanal (1511) versehen ist und der erste Durchgang (15) den ersten Strömungskanal (1511) umfasst.

4. Batterie nach einem der Ansprüche 1 bis 3, wobei die Verbindungsstruktur (151) so ausgelegt ist, dass sie bei Betätigung des Druckentlastungsmechanismus (213) beschädigt wird, sodass ein zweiter Raum zwischen der ersten Wand (21a) und der zweiten Wand (11c) gebildet wird, und der erste Durchgang (15) den zweiten Raum umfasst; und wobei vorzugsweise die Verbindungsstruktur (151) eine Schmelzschicht umfasst, die zwischen der ersten Wand (21a) und der zweiten Wand (11c) angeordnet ist, wobei die Schmelzschicht so ausgelegt ist, dass sie bei Betätigung des Druckentlastungsmechanismus (213) schmilzt, sodass der zweite Raum zwischen der ersten Wand (21a) und der zweiten Wand (11c) gebildet wird; und wobei noch bevorzugter die Dicke der Schmelzschicht 0,5 mm bis 3 mm beträgt.

5. Batterie nach einem der Ansprüche 1 bis 4, wobei die Verbindungsstruktur (151) ferner umfasst:

eine Sperrstruktur (1513), die zwischen der ersten Wand (21a) und der zweiten Wand (11c) und um den Druckentlastungsmechanismus (213) herum angeordnet ist, wobei die Sperrstruktur (1513) dazu verwendet wird, die durch den Druckentlastungsmechanismus (213) abgegebenen Emissionen daran zu hindern, die Elektrodenklemme (214) der Batteriezelle (20) zu erreichen; und vorzugsweise, wobei die Elektrodenklemme (214) an einer dritten Wand (21b) der Batteriezelle (20) angeordnet ist, wobei die dritte Wand (21b) die erste Wand (21a) schneidet und die Sperrstruktur (1513) auf einer Seite des Druckentlastungsmechanismus (213) angeordnet ist, die der Elektrodenklemme (214) nahe ist.

6. Batterie nach einem der Ansprüche 1 bis 5, wobei die Verbindungsstruktur (151) ein Wärmeleitpad und/oder ein Dichtungselement umfasst, das zwischen der ersten Wand (21a) und der zweiten Wand (11c) angeordnet ist.

7. Batterie nach einem der Ansprüche 1 bis 6, wobei die Batterie umfasst:

eine Batteriezellenanordnung (201); wobei die Batteriezellenanordnung (201) eine Mehrzahl von Batteriezellen (20) umfasst, die entlang einer ersten Richtung angeordnet sind, der elektrische Hohlraum (11a) eine vierte Wand (11d) umfasst, die die zweite Wand (11c) schneidet, zwischen einer Stirnfläche (2011) der Batteriezellenanordnung (201), die der vierten Wand (11d) zugewandt ist, und der vierten Wand (11d) ein dritter Raum vorgesehen ist, und der erste Durchgang (15) den dritten Raum umfasst; und vorzugsweise, wobei die Batterie ferner umfasst:

eine erste Abstandsstruktur (153), die zwischen der Stirnfläche (2011) und der vierten Wand (11d) angeordnet ist, wobei die erste Abstandsstruktur (153) dazu verwendet wird, zumindest einen Teil des ersten Durchgangs (15) zu bilden; und noch bevorzugter, wobei die erste Abstandsstruktur (153) mit einem zweiten Strömungskanal (1531) versehen ist und der erste Durchgang (15) den zweiten Strömungskanal (1531) umfasst.

8. Batterie nach einem der Ansprüche 1 bis 7, wobei die Batterie ferner umfasst:

eine zweite Abstandsstruktur (154), die zwischen zwei benachbarten Batteriezellen (20) angeordnet ist, wobei die zweite Abstandsstruktur (154) dazu verwendet wird, zumindest einen Teil des ersten Durchgangs (15) zu bilden; und vorzugsweise, wobei die zweite Abstandsstruktur (154) so ausgelegt ist, dass sie bei Betätigung des Druckentlastungsmechanismus (213) beschädigt wird, sodass ein vierter Raum zwischen den zwei Batteriezellen (20) gebildet wird, und der erste Durchgang (15) den vierten Raum umfasst.

9. Batterie nach Anspruch 8, wobei die zweite Abstandsstruktur (154) mit einem dritten Strömungskanal (1543) versehen ist und der erste Durchgang (15) den dritten Strömungskanal (1543) umfasst.

10. Batterie nach einem der Ansprüche 1 bis 9, wobei die zweite Wand (11c) mit einem Druckentlastungsbereich (114) versehen ist, der dem Druckentlastungsmechanismus (213) entspricht, wobei der Druckentlastungsbereich (114) dazu verwendet wird, zumindest einen Teil des zweiten Durchgangs (16) zu bilden; und vorzugsweise, wobei der Druckentlastungsbereich (114) ein Durchgangsloch ist, das die zweite Wand (11c) in einer Richtung senkrecht zur ersten Wand (21a) durchdringt.

11. Batterie nach einem der Ansprüche 1 bis 10, wobei der Kastenkörper (11) ferner umfasst:

einen Sammelhohlraum (11b), der dazu verwendet wird, die Emissionen zu sammeln, die bei Betätigung des Druckentlastungsmechanismus (213) durch den zweiten Durchgang (16) abgegeben werden; und wobei vorzugsweise die Batterie ferner umfasst: eine Isolationskomponente, die dazu ausgelegt ist, den elektrischen Hohlraum (11a) und den Sammelhohlraum (11b) voneinander zu isolieren.

12. Elektrische Vorrichtung, umfassend:
die Batterie nach einem der Ansprüche 1 bis 11, wobei die Batterie dazu ausgelegt ist, elektrische Energie für die elektrische Vorrichtung bereitzustellen.

## Revendications

1. Batterie, comprenant :

un boîtier (11), incluant une cavité électrique (11a) ;
une cellule de batterie (20), logée dans la cavité électrique (11a), une première paroi (21a) de la cellule de batterie (20) étant pourvue d'un mécanisme de décompression (213) ; et
un premier passage (15) et un deuxième passage (16), le premier passage (15) et le deuxième passage (16) étant configurés pour pouvoir communiquer avec l'intérieur de la cellule de batterie (20) par l'intermédiaire du mécanisme de décompression (213) lorsque le mécanisme de décompression (213) est actionné ;
le premier passage (15) étant utilisé pour décharger les émissions déchargées du mécanisme de décompression (213) dans la cavité électrique (11a), et le deuxième passage (16) étant utilisé pour décharger les émissions déchargées du mécanisme de décompression (213) hors de la cavité électrique (11a) ;
la cavité électrique (11a) comprenant une deuxième paroi (11c), et la première paroi (21a) étant en regard de la deuxième paroi (11c) ; et
la batterie comprenant en outre : une structure de connexion (151), la structure de connexion (151) étant disposée entre la première paroi (21a) et la deuxième paroi (11c), et la structure de connexion (151) étant utilisée pour former au moins une partie du premier passage (15) ;
la structure de connexion (151) étant pourvue d'une région d'évitement (1512) correspondant au mécanisme de décompression (213), et la région d'évitement (1512) étant utilisée pour fournir un espace de déformation pour le mécanisme de décompression (213) lors de l'actionnement, et la région d'évitement (1512) correspondant à au moins deux mécanismes de décompression (213).

2. Batterie selon la revendication 1, dans laquelle un premier espace (152) est prévu entre la deuxième paroi (11c) et la première paroi (21a), et le premier passage (15) inclut le premier espace (152).

3. Batterie selon l'une quelconque des revendications 1 ou 2, dans laquelle la structure de connexion (151) est pourvue d'un premier canal d'écoulement (1511), et le premier passage (15) inclut le premier canal d'écoulement (1511).

4. Batterie selon l'une quelconque des revendications 1 à 3, dans laquelle la structure de connexion (151) est configurée pour être endommagée lorsque le mécanisme de décompression (213) est actionné, de telle sorte qu'un deuxième espace soit formé entre la première paroi (21a) et la deuxième paroi (11c), et que le premier passage (15) inclue le deuxième espace ; et,

dans laquelle, de préférence, la structure de connexion (151) comprend une couche de fusion disposée entre la première paroi (21a) et la deuxième paroi (11c), la couche de fusion étant configurée pour être fondue lorsque le mécanisme de décompression (213) est actionné, de telle sorte que le deuxième espace soit formé entre la première paroi (21a) et la deuxième paroi (11c) ; et,
dans laquelle, de manière plus préférable, l'épaisseur de la couche de fusion est de 0.5 mm à 3 mm.

5. Batterie selon l'une quelconque des revendications 1 à 4, dans laquelle la structure de connexion (151) comprend en outre :

une structure de blocage (1513), disposée entre la première paroi (21a) et la deuxième paroi (11c) et autour du mécanisme de décompression (213), la structure de blocage (1513) étant utilisée pour empêcher les émissions déchargées à travers le mécanisme de décompression (213) d'atteindre la borne d'électrode (214) de la cellule de batterie (20), et dans laquelle, de préférence,
la borne d'électrode (214) est située sur une troisième paroi (21b) de la cellule de batterie (20), la troisième paroi (21b) présentant une intersection avec la première paroi (21a), et la structure de blocage (1513) est disposée sur un côté du mécanisme de décompression (213) à proximité de la borne d'électrode (214).

6. Batterie selon l'une quelconque des revendications 1 à 5, dans laquelle la structure de connexion (151) inclut un coussin thermique et/ou un joint d'étanchéité disposé entre la première paroi (21a) et la deuxième paroi (11c).

7. Batterie selon l'une quelconque des revendications 1 à 6, laquelle batterie comprend :

un ensemble de cellules de batterie (201) ; l'ensemble de cellules de batterie (201) incluant une pluralité de cellules de batterie (20), disposées le long d'une première direction, la cavité électrique (11a) incluant une quatrième paroi (11d) présentant une intersection avec la deuxième paroi (11c),
un troisième espace étant prévu entre une face d'extrémité (2011) de l'ensemble de cellules de batterie (201) en regard de la quatrième paroi (11d) et la quatrième paroi (11d), et le premier passage (15) incluant le troisième espace, et de préférence,
la batterie comprenant en outre :

une première structure d'entretoise (153), disposée entre la face d'extrémité (2011) et la quatrième paroi (11d), la première structure d'entretoise (153) étant utilisée pour former au moins une partie du premier passage (15), où, de manière plus préférable,
la première structure d'entretoise (153) est pourvue d'un deuxième canal d'écoulement (1531), et le premier passage (15) incluant le deuxième canal d'écoulement (1531).

8. Batterie selon l'une quelconque des revendications 1 à 7, laquelle batterie comprend en outre :

une deuxième structure d'entretoise (154), disposée entre deux cellules de batterie adjacentes (20), la deuxième structure d'entretoise (154) étant utilisée pour former au moins une partie du premier passage (15), et dans laquelle, de préférence,
la deuxième structure d'entretoise (154) est configurée pour être endommagée lorsque le mécanisme de décompression (213) est actionné, de telle sorte qu'un quatrième espace soit formé entre les deux cellules de batterie (20), et que le premier passage (15) inclue le quatrième espace.

9. Batterie selon la revendication 8, dans laquelle la deuxième structure d'entretoise (154) est pourvue d'un troisième canal d'écoulement (1543), et le premier passage (15) inclut le troisième canal d'écoulement (1543).

10. Batterie selon l'une quelconque des revendications 1 à 9, dans laquelle la deuxième paroi (11c) est pourvue d'une région de décompression (114) correspondant au mécanisme de décompression (213), et la région de décompression (114) est utilisée pour former au moins une partie du deuxième passage (16), et dans laquelle, de préférence, la région de décompression (114) est un trou débouchant pénétrant à travers la deuxième paroi (11c) dans une direction perpendiculaire à la première paroi (21a).

**11.** Batterie selon l'une quelconque des revendications 1 à 10, dans laquelle le boîtier (11) comprend en outre :

une cavité de collecte (11b), utilisée pour collecter les émissions déchargées à travers le deuxième passage (16) lorsque le mécanisme de décompression (213) est actionné ; et
dans laquelle, de préférence, la batterie comprend en outre :
un composant d'isolation, configuré pour isoler la cavité électrique (11a) et la cavité de collecte (11b).

**12.** Dispositif électrique, comprenant :
la batterie selon l'une quelconque des revendications 1 à 11, laquelle batterie est configurée pour fournir de l'énergie électrique pour le dispositif électrique.

**FIG. 1**

**FIG. 2**

**FIG. 3**

**FIG. 4**

**FIG. 5**

**FIG. 6**

**FIG. 7**

**FIG. 8**

**FIG. 9**

**FIG. 10**

**FIG. 11**

**FIG. 12**

**FIG. 13**

**FIG. 14**

**FIG. 15**

**FIG. 16**

**FIG. 17**

**FIG. 18**

**FIG. 19**

FIG. 20

**FIG. 21**

**FIG. 22**

**FIG. 23**

**FIG. 24**

**FIG. 25**

**FIG. 26**

**FIG. 27**

**FIG. 28**

**FIG. 29**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019005502 A1
- US 2022013849 A1
- DE 102013216071
- US 2022059901 A1
- US 2022123423 A1